# EUROPEAN PATENT APPLICATION

(11) **EP 4 349 898 A1**
(43) Date of publication of application: **10.04.2024**
(21) Application number: 22815770.7
(22) Date of filing: 27.04.2022
(51) Int. Cl.: C08K 5/521, C08L 23/12, C08L 25/04, C08L 71/12, C08K 3/013

(54) **POLYPHENYLENE ETHER RESIN COMPOSITION AND MOLDED ARTICLE**

(30) Priority: 01.06.2021 JP 2021092559
(71) Applicant: GLOBAL POLYACETAL CO., LTD., Tokyo 105-0021 (JP)
(72) Inventor: TAKANO, Yoichi, Hiratsuka-shi, Kanagawa 254-0016 (JP)
(74) Representative: Hoffmann Eitle
(86) International application number: PCT/JP2022/019179
(87) International publication number: WO 2022/255015

(57) **Abstract**

A polyphenylene ether-based resin composition that is an aspect of the present invention contains 2 to 20 parts by mass of a polypropylene homopolymer (c) and 1 to 25 parts by mass of an inorganic filler (d) with respect to 100 parts by mass of a polyphenylene ether-containing resin (A) containing a polyphenylene ether-based resin (a) or containing the polyphenylene ether-based resin (a) and a styrene-based resin (b).

## Description

### Field

The present invention relates to a polyphenylene ether-based resin composition and a molded article. Background

A polyphenylene ether-based resin is a resin that is excellent in various properties such as heat resistance, flame retardancy, electrical properties, and dimensional stability and further has excellent properties such as low specific gravity and hydrolysis resistance. Further, the molding processability and the impact resistance of the polyphenylene ether-based resin can be improved by blending various resins such as a styrene-based resin.

A polyphenylene ether-based resin composition containing such a polyphenylene ether-based resin, etc. has so far been widely used as a material for various uses such as electric components, electronic device components, and vehicle components. The polyphenylene ether-based resin composition is required to have various properties according to the use. For example, when a polyphenylene ether-based resin composition is used as a material for a protective housing that protects a battery unit including an assembled battery, etc., the polyphenylene ether-based resin composition is required to have high tracking resistance in addition to mechanical strength and heat resistance necessary as properties of a protective housing of a battery unit.

For example, as a polyphenylene ether-based resin composition having high tracking resistance, Patent Literature 1 discloses a resin composition containing a polyphenylene ether-based resin and at least one of a hydrogenated block copolymer having a specific structure and a modified product of the hydrogenated block copolymer.

### Citation List

### Patent Literature

Patent Literature 1: JP 2019-137742 A

### Summary

### Technical Problem

Depending on the use of the polyphenylene ether-based resin composition, high mechanical strength may be required. In general, the mechanical strength of a polyphenylene ether-based resin composition can be reinforced by adding a filler such as glass fiber.

However, in the conventional polyphenylene ether-based resin composition given as an example in Patent Literature 1 described above, there has been a problem that, when a filler such as glass fiber is added, although mechanical strength is reinforced, tracking resistance is greatly reduced. That is, for the conventional polyphenylene ether-based resin composition, it has been difficult to achieve both high mechanical strength and high tracking resistance, which are required according to uses such as a protective housing of a battery unit.

The present invention has been made in view of the above circumstances, and an object of the present invention is to provide a polyphenylene ether-based resin composition and a molded article capable of achieving both high mechanical strength and high tracking resistance. Solution to Problem

As a result of intensive studies to solve the above issue, the present inventor has found that a polyphenylene ether-based resin composition capable of achieving both high mechanical strength and high tracking resistance can be obtained by blending an inorganic filler and a polypropylene homopolymer at a specific ratio with respect to a resin component containing a polyphenylene ether-based resin or a resin component containing a polyphenylene ether-based resin and a styrene-based resin, and has completed the present invention.

To solve the problem described above and to achieve the object, a polyphenylene ether-based resin composition according to the present invention includes 2 to 20 parts by mass of a polypropylene homopolymer (c) and 1 to 25 parts by mass of an inorganic filler (d) with respect to 100 parts by mass of a polyphenylene ether-containing resin (A) containing a polyphenylene ether-based resin (a) or containing the polyphenylene ether-based resin (a) and a styrene-based resin (b).

In the polyphenylene ether-based resin composition according to the present invention, a mass ratio of the inorganic filler (d) to the polypropylene homopolymer (c) is 0.5 to 3.0.

In the polyphenylene ether-based resin composition according to the present invention, a melt flow rate of the polypropylene homopolymer (c) measured according to JIS K 7210 is 3 to 40 g/10 min under measurement conditions of a temperature of 230°C and a load of 2.16 kg.

The polyphenylene ether-based resin composition according to the present invention further includes 5 to 35 parts by mass of a flame retardant (e) with respect to 100 parts by mass of the polyphenylene ether-containing resin (A) .

In the polyphenylene ether-based resin composition according to the present invention, the flame retardant (e) is a phosphoric acid ester-based flame retardant.

The polyphenylene ether-based resin composition according to the present invention further includes 0.5 to 50 parts by mass of a flame retardant aid (f) with respect to 100 parts by mass of the polyphenylene ether-containing resin (A).

In the polyphenylene ether-based resin composition according to the present invention, the flame retardant aid (f) contains at least one selected from an alkaline earth metal salt, a metal hydroxide, a nitrogen-containing compound, an inorganic acid metal compound, and a layered double hydroxide.

In the polyphenylene ether-based resin composition according to the present invention, the flame retardant aid (f) is calcium carbonate.

In the polyphenylene ether-based resin composition according to the present invention, the inorganic filler (d) is at least one selected from glass fiber, mica, and talc.

In the polyphenylene ether-based resin composition according to the present invention, a content ratio of the polyphenylene ether-based resin (a) is 55 to 100 mass% and a content ratio of the styrene-based resin (b) is 0 to 45 mass% in 100 mass% of the polyphenylene ether-containing resin (A).

In the polyphenylene ether-based resin composition according to the present invention, a content ratio of the polyphenylene ether-based resin (a) is 90 to 100 mass% and a content ratio of the styrene-based resin (b) is 0 to 10 mass% in 100 mass% of the polyphenylene ether-containing resin (A).

The polyphenylene ether-based resin composition according to the present invention further includes 0.1 to 20 parts by mass of a phosphorus-based stabilizer (g) with respect to 100 parts by mass of the polyphenylene ether-containing resin (A).

In the polyphenylene ether-based resin composition according to the present invention, the phosphorus-based stabilizer (g) contains at least one of a phosphite-based compound and a phosphonite-based compound.

In the polyphenylene ether-based resin composition according to the present invention further includes 0.01 to 2.0 parts by mass of a black pigment (h) with respect to 100 parts by mass of the polyphenylene ether-containing resin (A).

In the polyphenylene ether-based resin composition according to the present invention, a CTI value measured according to IEC 60112 is 400 V or more, and a tensile strength measured according to ISO 527 is 60 MPa or more.

A molded article according to the present invention is made of the polyphenylene ether-based resin composition according to any one of the above-mentioned inventions.

In the molded article according to the present invention, the molded article is a battery unit housing. Advantageous Effects of Invention

According to the present invention, an effect of being capable of providing a polyphenylene ether-based resin composition and a molded article capable of achieving both high mechanical strength and high tracking resistance is exhibited.

### Description of Embodiments

Hereinbelow, preferred embodiments of a polyphenylene ether-based resin composition and a molded article according to the present invention are described in detail. Note that the present invention is not limited by the embodiments shown below. In the present specification, the expression of "to" is, unless otherwise specified, used in a meaning including numerical values written before and after "to" as a lower limit value and an upper limit value.

### [Polyphenylene ether-based resin composition]

A polyphenylene ether-based resin composition (hereinafter, referred to as a PPE-based resin composition (Z)) according to an embodiment of the present invention is a resin composition containing 2 to 20 parts by mass of a polypropylene homopolymer (c) and 1 to 25 parts by mass of an inorganic filler (d) with respect to 100 parts by mass of a polyphenylene ether-containing resin (A) containing a polyphenylene ether-based resin (a) or containing a polyphenylene ether-based resin (a) and a styrene-based resin (b). Each component contained in the PPE-based resin composition (Z), a molded article made of the PPE-based resin composition (Z), etc. will now be described in detail.

### [Polyphenylene ether-containing resin]

First, the polyphenylene ether-containing resin (A), which is a component contained in the PPE-based resin composition (Z) according to the embodiment of the present invention is described in detail. The polyphenylene ether-containing resin (A) is a resin containing at least the polyphenylene ether-based resin (a). Examples of the polyphenylene ether-containing resin (A) include one containing only the polyphenylene ether-based resin (a), one containing the polyphenylene ether-based resin (a) and the styrene-based resin (b) (that is, a modified polyphenylene ether-based resin), and the like. The modified polyphenylene ether-based resin (hereinafter, referred to as a modified PPE-based resin) contains the polyphenylene ether-based resin (a) as a main component, and further contains the styrene-based resin (b). The modified PPE-based resin may contain other resin components in addition to the polyphenylene ether-based resin (a) and the styrene-based resin (b) as necessary. The polyphenylene ether-containing resin (A) may be one containing the polyphenylene ether-based resin (a) as a main component and further containing a resin component other than the polyphenylene ether-based resin (a) or the styrene-based resin (b).

The main component referred to herein is a component contained in the largest amount in the component in question. That is, the content ratio of the polyphenylene ether-based resin (a) is more than 50 mass% in 100 mass% of the polyphenylene ether-containing resin (A) .

### [Polyphenylene ether-based resin (a)]

Next, the polyphenylene ether-based resin (a) according to the embodiment of the present invention is described in detail. The polyphenylene ether-based resin (a) is a resin component used for the PPE-based resin composition (Z) according to the embodiment of the present invention, and is contained in the PPE-based resin composition (Z) as a main component of the polyphenylene ether-containing resin (A). For example, the polyphenylene ether-based resin (a) is a polymer having a structural unit represented by General Formula (1) below in a main chain. The polyphenylene ether-based resin (a) may be a homopolymer or a copolymer.

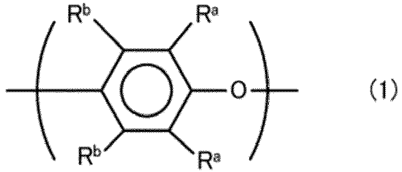

In General Formula (1), the two R^{a} each independently represent a hydrogen atom, a halogen atom, a primary alkyl group, a secondary alkyl group, an aryl group, an aminoalkyl group, a haloalkyl group, a hydrocarbon-oxy group, or a halohydrocarbon-oxy group. However, there is no case where both of these two R^{a} are hydrogen atoms. The two R^{b} each independently represent a hydrogen atom, a halogen atom, a primary alkyl group, a secondary alkyl group, an aryl group, a haloalkyl group, a hydrocarbon-oxy group, or a halohydrocarbon-oxy group.

R^{a} and R^{b} are each preferably a hydrogen atom, a primary alkyl group, a secondary alkyl group, or an aryl group. Preferred examples of the primary alkyl group include a methyl group, an ethyl group, a n-propyl group, a n-butyl group, a n-amyl group, an isoamyl group, a 2-methylbutyl group, a 2,3-dimethylbutyl group, a 2-methylpentyl group, a 3-methylpentyl group, a 4-methylpentyl group, a heptyl group, and the like. Preferred examples of the secondary alkyl group include an isopropyl group, a sec-butyl group, a 1-ethylpropyl group, and the like. Among them, R^{a} is particularly preferably a primary alkyl group having 1 to 4 carbon atoms, a secondary alkyl group having 1 to 4 carbon atoms, or a phenyl group. R^{b} is particularly preferably a hydrogen atom.

Preferred examples of the homopolymer of the polyphenylene ether-based resin (a) include a polymer of a 2,6-dialkylphenylene ether, and the like. Examples of the polymer of a 2,6-dialkylphenylene ether include poly(2,6-dimethyl-1,4-phenylene ether), poly(2,6-diethyl-1,4-phenylene ether), poly(2,6-dipropyl-1,4-phenylene ether), poly(2-ethyl-6-methyl-1,4-phenylene ether), poly(2-methyl-6-propyl-1,4-phenylene ether), and the like.

Preferred examples of the copolymer of the polyphenylene ether-based resin (a) include a 2,6-dialkylphenol/2,3,6-trialkylphenol copolymer, a graft copolymer in which styrene is graft-polymerized to poly(2,6-dimethyl-1,4-phenylene ether), a graft copolymer in which styrene is graft-polymerized to a 2,6-dimethylphenol/2,3,6-trimethylphenol copolymer, and the like. Examples of the 2,6-dialkylphenol/2,3,6-trialkylphenol copolymer include a 2,6-dimethylphenol/2,3,6-trimethylphenol copolymer, a 2,6-dimethylphenol/2,3,6-triethylphenol copolymer, a 2,6-diethylphenol/2,3,6-trimethylphenol copolymer, a 2,6-dipropylphenol/2,3,6-trimethylphenol copolymer, and the like.

Among them, poly(2,6-dimethyl-1,4-phenylene ether) and a 2,6-dimethylphenol/2,3,6-trimethylphenol random copolymer are particularly preferable as the polyphenylene ether-based resin (a). Further, for example, as described in JP 2005-344065 A, also a polyphenylene ether-based resin in which the number of terminal groups and the copper content ratio are prescribed can be suitably used as the polyphenylene ether-based resin (a).

For the molecular weight of the polyphenylene ether-based resin (a), an intrinsic viscosity measured at a temperature of 30°C with chloroform as a solvent is preferably 0.2 dl/g or more and more preferably 0.3 dl/g or more in a viscosity-average molecular weight obtained by conversion from the intrinsic viscosity. By setting the viscosity-average molecular weight of the polyphenylene ether-based resin (a) to one in which the intrinsic viscosity is 0.2 dl/g or more, the mechanical strength of the PPE-based resin composition (Z) tends to be improved. Further, the intrinsic viscosity is preferably 0.8 dl/g or less and more preferably 0.6 dl/g or less. By setting the viscosity-average molecular weight of the polyphenylene ether-based resin (a) to one in which the intrinsic viscosity is 0.8 dl/g or less, the fluidity of the PPE-based resin composition (Z) is improved, and as a result the molding processing of the PPE-based resin composition (Z) tends to be facilitated. Further, the viscosity-average molecular weight of the polyphenylene ether-based resin (a) may be set to one in which the intrinsic viscosity is in the range of 0.2 to 0.8 dl/g by using two or more kinds of polyphenylene ether-based resins having different intrinsic viscosities in combination.

The method for manufacturing the polyphenylene ether-based resin (a) is not particularly limited, and a known method can be employed. For example, the polyphenylene ether-based resin (a) can be manufactured by a method such as oxidative polymerization of a monomer such as 2,6-dimethylphenol in the presence of an amine copper catalyst. At this time, the intrinsic viscosity can be controlled to a desired range by selecting reaction conditions. For example, the control of the intrinsic viscosity can be achieved by selecting conditions such as polymerization temperature, polymerization time, and the amount of a catalyst.

As the polyphenylene ether-based resin (a) described above, one kind of polyphenylene ether-based resin may be used singly, or two or more kinds of polyphenylene ether-based resins may be mixed and used.

### [Styrene-based resin (b)]

Next, the styrene-based resin (b) according to the embodiment of the present invention is described in detail. The styrene-based resin (b) is a resin component used for the PPE-based resin composition (Z) according to the embodiment of the present invention, and is contained in the PPE-based resin composition (Z) as a component of the polyphenylene ether-containing resin (A). In this case, the polyphenylene ether-containing resin (A) is a modified PPE-based resin. Examples of the styrene-based resin (b) include a polymer of a styrene-based monomer, a copolymer of a styrene-based monomer and another copolymerizable monomer, a styrene-based graft copolymer, and the like.

More specific examples of the styrene-based resin (b) include resins such as polystyrene (PS), high-impact polystyrene (HIPS), an acrylonitrile-styrene copolymer (AS resin), an acrylonitrile-butadiene-styrene copolymer (ABS resin), a methyl methacrylate-acrylonitrile-butadiene-styrene copolymer (MABS resin), an acrylonitrile-acrylic rubber-styrene copolymer (AAS resin), an acrylonitrile-ethylene propylene-based rubber-styrene copolymer (AES resin), and a styrene-IPN-type rubber copolymer, and mixtures of them. The styrene-based resin (b) may be one having stereoregularity, such as syndiotactic polystyrene. Among them, polystyrene and high-impact polystyrene are preferable as the styrene-based resin (b).

The weight-average molecular weight (Mw) of the styrene-based resin (b) is, for example, 50,000 or more, preferably 100,000 or more, and more preferably 150,000 or more. The upper limit of the Mw of the styrene-based resin (b) is, for example, 500,000 or less, preferably 400,000 or less, and more preferably 300,000 or less. The Mw of the styrene-based resin (b) can be measured by, for example, a measurement method such as size-exclusion chromatography.

The method for manufacturing the styrene-based resin (b) is not particularly limited, and a known method can be employed. For example, the styrene-based resin (b) can be manufactured by a method such as an emulsion polymerization method, a solution polymerization method, a suspension polymerization method, or a bulk polymerization method. As the styrene-based resin (b), one kind of styrene-based resin may be used singly, or two or more kinds of styrene-based resins may be mixed and used.

Such a styrene-based resin (b) is contained in the polyphenylene ether-containing resin (A) at a content ratio smaller than that of the polyphenylene ether-based resin (a), which is a main component of the polyphenylene ether-containing resin (A). For example, from the viewpoint of improving the heat resistance (good deflection temperature under load) of the PPE-based resin composition (Z), it is preferable that the content ratio of the polyphenylene ether-based resin (a) be 55 mass% or more and the content ratio of the styrene-based resin (b) be 45 mass% or less in 100 mass% of the polyphenylene ether-containing resin (A). Further, from the viewpoint of improving the flame retardancy and the mechanical strength of the PPE-based resin composition (Z), it is more preferable that the content ratio of the polyphenylene ether-based resin (a) be 65 mass% or more and the content ratio of the styrene-based resin (b) be 35 mass% or less in 100 mass% of the polyphenylene ether-containing resin (A). In particular, when wall thickness reduction and high flame retardancy of a molded article made of the PPE-based resin composition (Z) are required, it is preferable that the content ratio of the polyphenylene ether-based resin (a) be 80 mass% or more and the content ratio of the styrene-based resin (b) be 20 mass% or less, it is more preferable that the content ratio of the polyphenylene ether-based resin (a) be 85 mass% or more and the content ratio of the styrene-based resin (b) be 15 mass% or less, and it is still more preferable that the content ratio of the polyphenylene ether-based resin (a) be 90 mass% or more and the content ratio of the styrene-based resin (b) be 10 mass% or less. Further, in 100 mass% of the polyphenylene ether-containing resin (A), the content ratio of the polyphenylene ether-based resin (a) may be 100 mass% or less, and the content ratio of the styrene-based resin (b) may be 0 mass% or more.

In the embodiment of the present invention, the heat resistance of the PPE-based resin composition (Z) is represented by, for example, a deflection temperature under load measured according to JIS K 7191-2 or ISO 75-2. The deflection temperature under load of the PPE-based resin composition (Z) can be increased to a predetermined value or more by the containing of the polyphenylene ether-based resin (a). For example, the deflection temperature under load of the PPE-based resin composition (Z) is preferably 100°C or more under measurement conditions where a load of 1.80 MPa is applied.

### [Other resin components]

Next, other resin components than the polyphenylene ether-based resin (a) or the styrene-based resin (b) described above among the resin components contained in the polyphenylene ether-containing resin (A) are described in detail. The polyphenylene ether-containing resin (A) may contain other resin components in addition to the polyphenylene ether-based resin (a) and the styrene-based resin (b) described above to the extent that the effect of improving properties such as the mechanical strength and the tracking resistance of the PPE-based resin composition (Z) according to the embodiment of the present invention is not impaired.

Specifically, examples of the other resin component include a thermoplastic resin, a thermosetting resin, and the like. Examples of the thermoplastic resin include a polyamide resin, a polyester resin, a polyphenylene sulfide resin, a liquid crystal polyester resin, a polycarbonate resin, a polyacetal resin, a polyacrylonitrile resin, an acrylic resin, olefin-based resins such as a polyethylene resin and a polypropylene copolymer resin, and the like. Examples of the thermosetting resin include an epoxy resin, a melamine resin, a silicone resin, and the like.

The polyphenylene ether-containing resin (A) may contain, as the other resin component, two or more kinds of thermoplastic resins, two or more kinds of thermosetting resins, or a combination of two or more kinds among the thermoplastic resins and the thermosetting resins. The content ratio of the other resin component in 100 mass% of the polyphenylene ether-containing resin (A) is preferably 5 mass% or less, more preferably 2 mass% or less, still more preferably 1 mass% or less, and particularly preferably 0.5 mass% or less.

### [Polypropylene homopolymer (c)]

Next, the polypropylene homopolymer (c), which is a component contained in the PPE-based resin composition (Z) according to the embodiment of the present invention, is described in detail. The polypropylene homopolymer (c) is a crystalline resin in which propylene is homopolymerized, and is contained in the PPE-based resin composition (Z) mainly for the purpose of improving the tracking resistance of the PPE-based resin composition (Z).

The density of the polypropylene homopolymer (c) is not particularly limited, but is about 0.9 g/cm³ as a value obtained by a measurement method according to JIS K 7112.

Here, in a resin composition containing a polypropylene resin in which propylene is polymerized, generally a nucleating agent such as a metal salt of an aromatic carboxylic acid or talc may be blended for the purpose of improving the crystallinity of polypropylene. However, when a nucleating agent is blended in a polypropylene resin, the tracking resistance of a resin composition containing the polypropylene resin may be deteriorated. Thus, the polypropylene homopolymer (c) according to the embodiment of the present invention is preferably a polypropylene resin not containing a nucleating agent.

The melt flow rate (hereinafter, referred to as MFR as appropriate) of the polypropylene homopolymer (c) is measured according to JIS K 7210, and is, for example, under the measurement conditions of a temperature of 230°C and a load of 2.16 kg, preferably 0.5 to 100 g/10 min, more preferably 2.0 to 50 g/10 min, still more preferably 3.0 to 40 g/10 min, and particularly preferably 3.0 to 30 g/10 min. If the MFR of the polypropylene homopolymer (c) under the above measurement conditions is less than 0.5 g/10 min, the processability (moldability) of the PPE-based resin composition (Z) containing the polypropylene homopolymer (c) may be impaired. If the MFR of the polypropylene homopolymer (c) under the above measurement conditions is less than 3.0 g/10 min, the effect of improving the tracking resistance of the PPE-based resin composition (Z) by the polypropylene homopolymer (c) may be lower than when the MFR is 3.0 g/10 min or more. Thus, the MFR is more preferably 3.0 g/10 min or more. Further, if the MFR of the polypropylene homopolymer (c) under the above measurement conditions is more than 100 g/10 min, the mechanical strength of the PPE-based resin composition (Z) containing the polypropylene homopolymer (c) may be impaired. From the viewpoint of suppressing a reduction in mechanical strength of the PPE-based resin composition (Z), the MFR is more preferably 40 g/10 min or less.

In the present embodiment, as the polypropylene homopolymer (c), one kind of polypropylene homopolymer may be used singly, or two or more kinds of polypropylene homopolymers may be blended and used.

In the PPE-based resin composition (Z) according to the embodiment of the present invention, the content amount of the polypropylene homopolymer (c) is preferably 2 parts by mass or more, more preferably 4 parts by mass or more, still more preferably 5 parts by mass or more, and particularly preferably 6 parts by mass or more with respect to 100 parts by mass of the polyphenylene ether-containing resin (A). Further, the content amount of the polypropylene homopolymer (c) is preferably 20 parts by mass or less, more preferably 19 parts by mass or less, still more preferably 18 parts by mass or less, and particularly preferably 17 parts by mass or less with respect to 100 parts by mass of the polyphenylene ether-containing resin (A). By a content amount in this range of the polypropylene homopolymer (c) being contained in the PPE-based resin composition (Z), the tracking resistance of the PPE-based resin composition (Z) can be improved.

The tracking resistance of the PPE-based resin composition (Z) is represented by a comparative tracking index (hereinafter, referred to as a CTI value), which is an index indicating the degree of unlikelihood of tracking of an insulator. The CTI value of the PPE-based resin composition (Z) is measured according to IEC 60112, and can be increased to a predetermined value or more by the containing of the polypropylene homopolymer (c). For example, the CTI value of the PPE-based resin composition (Z) is preferably 400 V or more, more preferably 500 V or more, still more preferably 525 V or more, and particularly preferably 550 V or more.

If the content amount of the polypropylene homopolymer (c) is less than 2 parts by mass, the effect of improving tracking resistance by the polypropylene homopolymer (c) cannot be obtained. That is, the CTI value of the PPE-based resin composition (Z) is not improved to a target value. Further, if the content amount of the polypropylene homopolymer (c) is more than 20 parts by mass, the mechanical strength of the PPE-based resin composition (Z) is reduced. Further, since the polypropylene homopolymer (c) is an easily combustible resin, also the flame retardancy of the PPE-based resin composition (Z) is impaired.

### [Inorganic filler (d)]

Next, the inorganic filler (d) according to the embodiment of the present invention is described in detail. The inorganic filler (d) is a component contained in the PPE-based resin composition (Z) according to the embodiment of the present invention, and is contained in the PPE-based resin composition (Z) mainly for the purpose of improving the mechanical strength of the PPE-based resin composition (Z) .

Examples of such an inorganic filler (d) include glass fiber, glass flakes, glass beads, milled fiber, alumina fiber, carbon fiber, aramid fiber, titanium oxide, boron nitride, potassium titanate whiskers, silica, mica, talc, wollastonite, and the like. Among them, the inorganic filler (d) is preferably at least one selected from glass fiber, mica, and talc and particularly preferably glass fiber because the effect of improving the mechanical strength of the PPE-based resin composition (Z) with respect to the added amount is high.

The shape, etc. of the inorganic filler (d) are not particularly limited. As the inorganic filler (d), one kind of inorganic filler may be used singly, or two or more kinds of inorganic fillers may be blended and used.

The glass fiber suitably used as the inorganic filler (d) is one having an average diameter of 20 µm or less. From the viewpoint of further enhancing the physical property balance (heat resistance, rigidity, and impact strength) of the PPE-based resin composition (Z) and the viewpoint of further reducing the molding warpage of the PPE-based resin composition (Z), the glass fiber is particularly preferably one having an average diameter of 1 to 15 µm.

The length of the glass fiber as the inorganic filler (d) is not specified, and the glass fiber can be selected and used from a long fiber type (roving), a short fiber type (chopped strand), and the like. The number of glass fibers bundled in this case is preferably about 100 to 5000. As long as the average length of the glass fibers contained in the PPE-based resin composition (Z) after kneading is 0.1 mm or more, the inorganic filler (d) may be a pulverized product of strands called milled fiber or glass powder, or may be an inorganic filler of continuous monofilament-based slivers. The glass fiber as the inorganic filler (d) may be one of which the composition of the raw material glass is alkali-free. Examples of the glass fiber include E glass, C glass, S glass, and the like. Among them, E glass is preferable as the inorganic filler (d).

It is more preferable to use, as the inorganic filler (d), one surface-treated with a surface treatment agent such as a coupling agent in order to improve adhesion with resin. When a surface-treated inorganic filler (d) is used, durability, moisture-heat resistance, hydrolysis resistance, and heat shock resistance tend to be excellent. As the surface treatment agent, any known surface treatment agent can be used, and specific preferred examples include various coupling agents such as aminosilane-based, epoxysilane-based, allylsilane-based, vinylsilane-based, and titanate-based coupling agents. Among them, aminosilane-based, epoxysilane-based, and vinylsilane-based surface treatment agents are preferable, and specific preferred examples include γ-aminopropyltriethoxysilane, γ-aminopropyltrimethoxysilane, and γ-(2-aminoethyl)aminopropyltrimethoxysilane, γ-glycidoxypropyltrimethoxysilane, vinyltrichlorosilane, vinyltriethoxysilane, and γ-methacryloxypropyltrimethoxysilane. Each of these silane compounds may be used singly, or a plurality of kinds of them may be combined and used. Further, as the inorganic filler (d), one surface-treated with, in addition to the above surface treatment agent, a lubricant such as a fatty acid amide compound or silicone oil, an antistatic agent such as a quaternary ammonium salt, a resin having coating-forming ability such as an epoxy resin or a urethane resin, or a mixture of a resin having coating-forming ability and a heat stabilizer, a flame retardant, or the like as necessary can be used.

In the PPE-based resin composition (Z) according to the embodiment of the present invention, when two or more kinds of inorganic fillers (d) are blended and used, the content ratio of glass fiber in 100 mass% of the blended inorganic filler (d) is preferably 25 mass% or more, more preferably 40 mass% or more, and still more preferably 50 mass% or more. By using glass fiber in this range as a component of the inorganic filler (d), the mechanical strength of the PPE-based resin composition (Z) can be effectively improved.

In the PPE-based resin composition (Z) according to the embodiment of the present invention, the content amount of the inorganic filler (d) is 1 part by mass or more, preferably 3 parts by mass or more, more preferably 5 parts by mass or more, and still more preferably 6 parts by mass or more with respect to 100 parts by mass of the polyphenylene ether-containing resin (A). Further, the content amount of the inorganic filler (d) is 25 parts by mass or less, preferably 23 parts by mass or less, more preferably 20 parts by mass or less, and still more preferably 19 parts by mass or less with respect to 100 parts by mass of the polyphenylene ether-containing resin (A). By a content amount in this range of the inorganic filler (d) being contained in the PPE-based resin composition (Z), the mechanical strength of the PPE-based resin composition (Z) can be improved, and furthermore dimensional accuracy can be improved and the differences in thermal expansion coefficient from other materials (metal materials and the like) can be reduced. In the PPE-based resin composition (Z), the lower limit of the mass ratio ((d)/(c)) of the inorganic filler (d) to the polypropylene homopolymer (c) is preferably 0.5 or more, more preferably 0.6 or more, and still more preferably 0.7 or more. The upper limit of the mass ratio ((d)/(c)) is preferably 3.0 or less, more preferably 2.5 or less, and still more preferably 1.5 or less.

When the content amount of the inorganic filler (d) is 12 parts by mass or less with respect to 100 parts by mass of the polyphenylene ether-containing resin (A), the content amount of the polypropylene homopolymer (c) is preferably 2 to 18 parts by mass, more preferably 4 to 16 parts by mass, and still more preferably 5 to 15 parts by mass. Further, when the content amount of the inorganic filler (d) is more than 12 parts by mass with respect to 100 parts by mass of the polyphenylene ether-containing resin (A), the content amount of the polypropylene homopolymer (c) is preferably 7 to 20 parts by mass, more preferably 8 to 19 parts by mass, and still more preferably 9 to 18 parts by mass.

In the embodiment of the present invention, the mechanical strength of the PPE-based resin composition (Z) is represented by, for example, tensile strength. The tensile strength of the PPE-based resin composition (Z) is measured according to ISO 527, and can be increased to a predetermined value or more by the containing of the inorganic filler (d). For example, the tensile strength of the PPE-based resin composition (Z) is preferably 59 MPa or more and more preferably 60 MPa or more.

If the content amount of the inorganic filler (d) is less than 1 part by mass, the effect of improving mechanical strength by the inorganic filler (d) cannot be obtained. That is, the tensile strength of the PPE-based resin composition (Z) is not improved to a target value. Further, if the content amount of the inorganic filler (d) is more than 25 parts by mass, the tracking resistance of the PPE-based resin composition (Z) is significantly deteriorated. In this case, the PPE-based resin composition (Z) cannot secure a CTI value of, for example, 400 V or more as tracking resistance.

### [Flame retardant (e)]

Next, a flame retardant (e) used for the PPE-based resin composition (Z) according to the embodiment of the present invention is described in detail. The PPE-based resin composition (Z) may further contain a flame retardant (e) in addition to the polyphenylene ether-containing resin (A), the polypropylene homopolymer (c), and the inorganic filler (d) described above. The flame retardant (e) is used to impart flame retardancy required according to the use of the PPE-based resin composition (Z) to the PPE-based resin composition (Z). By the containing of the flame retardant (e), the PPE-based resin composition (Z) has more excellent flame retardancy.

The flame retardant (e) is not particularly limited as long as it improves the flame retardancy of the PPE-based resin composition (Z), but is preferably a phosphorus-based flame retardant having good compatibility with the polyphenylene ether-based resin (a) described above. Among phosphorus-based flame retardants, the flame retardant (e) is more preferably a phosphoric acid ester-based flame retardant. As the flame retardant (e), one kind of flame retardant may be used singly, or two or more kinds of flame retardants having different compositions may be used in combination.

In particular, when a phosphorus-based flame retardant is used as the flame retardant (e), the phosphorus-based flame retardant is, for example, preferably a phosphoric acid ester-based flame retardant represented by General Formula (2) below.

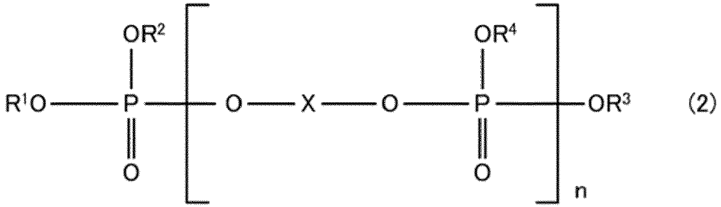

In General Formula (2), R¹, R², R³, and R⁴ each independently represent an aryl group. The aryl group may be substituted or unsubstituted. X represents a divalent aromatic group. The divalent aromatic group may or may not have a substituent. n represents an integer of 0 to 5.

Examples of the aryl group represented by each of R¹, R², R³, and R⁴ include a phenyl group, a naphthyl group, and the like. Examples of the divalent aromatic group represented by X include a phenylene group, a naphthylene group, a group derived from bisphenol, and the like. Examples of the substituent in each of R¹, R², R³, R⁴, and X include an alkyl group, an alkoxy group, a hydroxy group, and the like. When the integer n is 0, the phosphoric acid ester-based flame retardant represented by General Formula (2) is a phosphoric acid ester. When the integer n is any one of 1 to 5, the phosphoric acid ester-based flame retardant represented by General Formula (2) is a condensed phosphoric acid ester. The condensed phosphoric acid ester may be a mixture.

Examples of such a phosphoric acid ester-based flame retardant include bisphenol A bisphosphate, hydroquinone bisphosphate, and resorcinol bisphosphate, substitution products and condensation products of them, and the like. Examples of commercially available condensed phosphoric acid esters that can be suitably used as the phosphoric acid ester-based flame retardant include "CR 733 S" (resorcinol bis(diphenyl phosphate)), "CR 741" (bisphenol A bis(diphenyl phosphate)), and "PX-200" (resorcinol bis(dixylenyl phosphate)) manufactured by Daihachi Chemical Industry Co., Ltd., "FP 500" (resorcinol bis(dixylenyl phosphate)) manufactured by ADEKA Corporation, and the like, and these are easily available.

When the PPE-based resin composition (Z) according to the embodiment of the present invention contains the flame retardant (e), the content amount of the flame retardant (e) is preferably 5 parts by mass or more, more preferably 10 parts by mass or more, and still more preferably 12 parts by mass or more with respect to 100 parts by mass of the polyphenylene ether-containing resin (A). Further, the content amount of the flame retardant (e) is preferably 35 parts by mass or less, more preferably 30 parts by mass or less, still more preferably 27 parts by mass or less, and particularly preferably 25 parts by mass or less with respect to 100 parts by mass of the polyphenylene ether-containing resin (A). By a content amount in this range of the flame retardant (e) being contained in the PPE-based resin composition (Z), the flame retardancy of the PPE-based resin composition (Z) can be improved. Specifically, when the PPE-based resin composition (Z) contains the polypropylene homopolymer (c) for the purpose of improving tracking resistance, the flame retardancy of the PPE-based resin composition (Z) may be reduced due to the ease of combustion of the polypropylene homopolymer (c). In contrast, by the flame retardant (e) being contained in the PPE-based resin composition (Z) in the above content amount, the flame retardant (e) can suppress a reduction in flame retardancy due to the polypropylene homopolymer (c), and can improve the flame retardancy of the PPE-based resin composition (Z).

In the embodiment of the present invention, the flame retardancy of the PPE-based resin composition (Z) is represented by, for example, a combustion level (a grade such as V-0, V-1, or V-2) determined based on a flammability test according to the UL 94 standard (hereinafter, referred to as a UL 94 V test). By the containing of the flame retardant (e), the flame retardancy of the PPE-based resin composition (Z) can be improved to such a degree that any of the combustion levels (for example, V-1 or more) based on the UL 94 V test is satisfied.

If the content amount of the flame retardant (e) is less than 5 parts by mass, there is a case where, even though contained in the PPE-based resin composition (Z), the flame retardant (e) cannot impart flame retardancy to the PPE-based resin composition (Z). Further, if the content amount of the flame retardant (e) is more than 35 parts by mass, the mechanical strength and the heat resistance of the PPE-based resin composition (Z) may be reduced.

When the content amount of the inorganic filler (d) is 12 parts by mass or more with respect to 100 parts by mass of the polyphenylene ether-containing resin (A), to impart flame retardancy to the PPE-based resin composition (Z), the content amount of the flame retardant (e) is preferably 15 to 35 parts by mass, more preferably 18 to 30 parts by mass, and still more preferably 19 to 27 parts by mass.

### [Flame retardant aid (f)]

Next, a flame retardant aid (f) used for the PPE-based resin composition (Z) according to the embodiment of the present invention is described in detail. The PPE-based resin composition (Z) may further contain a flame retardant aid (f) in addition to the polyphenylene ether-containing resin (A), the polypropylene homopolymer (c), the inorganic filler (d), etc. described above. The flame retardant aid (f) is a component blended in the PPE-based resin composition (Z) for the purpose of imparting flame retardancy to the PPE-based resin composition (Z) and improving the tracking resistance of the PPE-based resin composition (Z).

Examples of such a flame retardant aid (f) include alkaline earth metal salts (for example, carbonates such as calcium carbonate, phosphates (hydrogen phosphates) such as calcium hydrogen phosphate, and the like), metal hydroxides (for example, aluminum hydroxide, magnesium hydroxide, zirconium hydroxide, alumina hydrate (boehmite), and the like), inorganic acid metal compounds (for example, (hydrous) metal borates such as (hydrous) zinc borate, (hydrous) calcium borate, and (hydrous) aluminum borate, (hydrous) metal stannates such as (hydrous) zinc stannate, and the like), nitrogen-containing compounds (for example, aminotriazine compounds (melamine; guanamine; melamine condensates such as melam and melem; and the like), salts of aminotriazine compounds, organic acid or inorganic acid salts of the aminotriazine compounds (specifically, cyanurates such as melamine cyanurate and phosphates such as melamine polyphosphate), and the like), layered double hydroxides (hydrotalcite and the like), metal sulfates (calcium sulfate, magnesium sulfate, barium sulfate, and the like), and metal sulfides (zinc sulfide, molybdenum sulfide, tungsten sulfide, and the like). Among them, preferred flame retardant aids (f) are alkaline earth metal salts, metal hydroxides, nitrogen-containing compounds, inorganic acid metal compounds, and layered double hydroxides. That is, the flame retardant aid (f) preferably contains at least one selected from an alkaline earth metal salt, a metal hydroxide, a nitrogen-containing compound, an inorganic acid metal compound, and a layered double hydroxide. What is more preferable as the flame retardant aid (f) is an alkaline earth metal salt (for example, calcium carbonate). Each of these flame retardant aids (f) can be used singly, or two or more kinds of them can be combined and used.

The flame retardant aid (f) may be surface-treated. The surface treatment applied to the flame retardant aid (f) is not particularly limited, and examples include a surface treatment with a fatty acid, a resin acid, silicic acid, phosphoric acid, a silane coupling agent, or an alkylarylsulfonic acid, a salt thereof, or the like, etc. Examples of the fatty acid include a saturated or unsaturated fatty acid having 6 to 31 carbon atoms, and preferred examples include a saturated or unsaturated fatty acid having 12 to 28 carbon atoms. Among them, a flame retardant aid (f) surface-treated with a fatty acid is preferable from the viewpoint of dispersibility and handleability at the time of manufacturing. When calcium carbonate surface-treated with a fatty acid is used as the flame retardant aid (f), the flame retardant aid (f) is more uniformly dispersed in the polyphenylene ether-containing resin (A), and thereby the tracking resistance and the flame retardancy of the PPE-based resin composition (Z) become further excellent.

When the PPE-based resin composition (Z) according to the embodiment of the present invention contains the flame retardant aid (f), the content amount of the flame retardant aid (f) is preferably 0.5 parts by mass or more and more preferably 2 parts by mass or more with respect to 100 parts by mass of the polyphenylene ether-containing resin (A). Further, the content amount of the flame retardant aid (f) is preferably 50 parts by mass or less, more preferably 40 parts by mass or less, and still more preferably 30 parts by mass or less with respect to 100 parts by mass of the polyphenylene ether-containing resin (A). By a content amount in this range of the flame retardant aid (f) being contained in the PPE-based resin composition (Z), flame retardancy can be imparted to the PPE-based resin composition (Z), and the tracking resistance of the PPE-based resin composition (Z) can be improved.

For example, when the PPE-based resin composition (Z) contains the flame retardant (e) for the purpose of improving flame retardancy, there is a concern that the flame retardant (e) will promote the formation of a carbonized layer (char), which is a cause of a short circuit, and the tracking resistance of the PPE-based resin composition (Z) will be reduced. In contrast, the flame retardant aid (f), by being contained in the PPE-based resin composition (Z) in the above content amount, can suppress a reduction in tracking resistance due to the flame retardant (e), and can improve the tracking resistance of the PPE-based resin composition (Z) (can improve the CTI value). Further, even when the flame retardant aid (f) is used singly, an endothermic diluting action by dehydration or decomposition of the flame retardant aid (f) may be utilized to suppress generation of and promote volatilization of carbonized components, and thereby tracking resistance can be improved. In addition, the flame retardant aid (f) can support the impartation of flame retardancy to the PPE-based resin composition (Z) by the flame retardant (e), and thereby improves the flame retardancy of the PPE-based resin composition (Z) in cooperation with the flame retardant (e).

If the content amount of the flame retardant aid (f) is less than 0.5 parts by mass, there is a concern that, even though contained in the PPE-based resin composition (Z), the flame retardant aid (f) cannot improve the tracking resistance of the PPE-based resin composition (Z), and furthermore there is a concern that flame retardancy cannot be imparted to the PPE-based resin composition (Z). Further, if the content amount of the flame retardant aid (f) (for example, an alkaline earth metal salt) is more than 50 parts by mass, mechanical properties such as rigidity and impact resistance and heat resistance of the PPE-based resin composition (Z) may be reduced.

When the content amount of the inorganic filler (d) is 12 parts by mass or less with respect to 100 parts by mass of the polyphenylene ether-containing resin (A), the content amount of the flame retardant aid (f) is preferably 0.5 to 50 parts by mass, more preferably 2 to 40 parts by mass, and still more preferably 5 to 25 parts by mass. Further, when the content amount of the inorganic filler (d) is more than 12 parts by mass with respect to 100 parts by mass of the polyphenylene ether-containing resin (A), the content amount of the flame retardant aid (f) is preferably 3 to 50 parts by mass, more preferably 5 to 40 parts by mass, and still more preferably 10 to 30 parts by mass. By a content amount in such a range of the flame retardant aid (f) being contained in the PPE-based resin composition (Z), the tracking resistance and the flame retardancy of the PPE-based resin composition (Z) due to the addition of the flame retardant aid (f) can be more effectively improved. Furthermore, undesired situations such as a reduction in heat resistance, a reduction in mechanical properties, and a reduction in fluidity of the PPE-based resin composition (Z) can be suppressed.

The total content amount of the polyphenylene ether-based resin (a), the styrene-based resin (b), the polypropylene homopolymer (c), and the inorganic filler (d) contained in the PPE-based resin composition (Z) is preferably 95 mass% or more, more preferably 97 mass% or more, still more preferably 98 mass% or more, and particularly preferably 99 mass% or more with respect to 100 mass% of the PPE-based resin composition (Z). By setting the total content amount in the above range, a PPE-based resin composition (Z) having good tracking resistance and good mechanical strength can be obtained.

When the PPE-based resin composition (Z) further contains the flame retardant (e) and the flame retardant aid (f), the total content amount of the polyphenylene ether-based resin (a), the styrene-based resin (b), the polypropylene homopolymer (c), the inorganic filler (d), the flame retardant (e), and the flame retardant aid (f) in the PPE-based resin composition (Z) is preferably 95 mass% or more, more preferably 97 mass% or more, still more preferably 98 mass% or more, and particularly preferably 99 mass% or more with respect to 100 mass% of the PPE-based resin composition (Z). By setting the total content amount in the above range, a PPE-based resin composition (Z) having good tracking resistance and good mechanical strength can be obtained.

### [Phosphorus-based stabilizer (g)]

Next, a phosphorus-based stabilizer (g) used for the PPE-based resin composition (Z) according to the embodiment of the present invention is described in detail. The PPE-based resin composition (Z) may further contain a phosphorus-based stabilizer (g) in addition to the polyphenylene ether-containing resin (A), the polypropylene homopolymer (c), the inorganic filler (d), etc. described above. The phosphorus-based stabilizer (g) is a component contained in the PPE-based resin composition (Z) for the purpose of improving thermal stability during melt-kneading in a manufacturing step and a molding step and during use of the PPE-based resin composition (Z) and imparting flame retardancy to the PPE-based resin composition (Z).

Examples of the phosphorus-based stabilizer (g) include phosphite-based compounds, phosphonite-based compounds, and the like. For these compounds, as the phosphorus-based stabilizer (g), one kind may be used singly, or two or more kinds may be mixed and used. The phosphorus-based stabilizer (g) preferably contains at least one of a phosphite-based compound and a phosphonite-based compound.

Specific examples of the phosphite-based compound include tris(2,4-di-t-butylphenyl) phosphite, bis(2,4-di-t-butylphenyl) pentaerythritol-di-phosphite, bis(2,6-di-t-butyl-4-methylphenyl) pentaerythritol-di-phosphite, 2,2-methylenebis(4,6-di-t-butylphenyl) octyl phosphite, 4,4'-butylidene-bis(3-methyl-6-t-butylphenyl-di-tridecyl) phosphite, 1,1,3-tris(2-methyl-4-di-tridecylphosphite-5-t-butyl-phenyl)butane, tris(mixed mono- and di-nonylphenyl) phosphite, tris(nonylphenyl) phosphite, 4,4'-isopropylidene-bis(phenyl-dialkylphosphite), and the like. Among them, tris(2,4-di-t-butylphenyl) phosphite, 2,2-methylenebis(4,6-di-t-butylphenyl) octyl phosphite, and bis(2,6-di-t-butyl-4-methylphenyl) pentaerythritol-di-phosphite are preferable.

Specific examples of the phosphonite-based compound include tetrakis(2,4-di-t-butylphenyl)-4,4'-biphenylenediphosphonite, tetrakis(2,5-di-t-butylphenyl)-4,4'-biphenylenediphosphonite, tetrakis(2,3,4-trimethylphenyl)-4,4'-biphenylenediphosphonite, tetrakis(2,3-dimethyl-5-ethylphenyl)-4,4'-biphenylenediphosphonite, tetrakis(2,6-di-t-butyl-5-ethylphenyl)-4,4'-biphenylenediphosphonite, tetrakis(2,3,4-tributylphenyl)-4,4'-biphenylenediphosphonite, tetrakis(2,4,6-tri-t-butylphenyl)-4,4'-biphenylenediphosphonite, and the like. Among them, tetrakis(2,4-di-t-butylphenyl)-4,4'-biphenylenediphosphonite is preferable.

When the PPE-based resin composition (Z) according to the embodiment of the present invention contains the phosphorus-based stabilizer (g), the content amount of the phosphorus-based stabilizer (g) is preferably 0.1 parts by mass or more, more preferably 0.5 parts by mass or more, still more preferably 1.0 part by mass or more, and particularly preferably 2.0 parts by mass or more with respect to 100 parts by mass of the polyphenylene ether-containing resin (A). Further, the content amount of the phosphorus-based stabilizer (f) is preferably 20.0 parts by mass or less, more preferably 10.0 parts by mass or less, still more preferably 7.0 parts by mass or less, and particularly preferably 5.0 parts by mass or less with respect to 100 parts by mass of the polyphenylene ether-containing resin (A). By a content amount in this range of the phosphorus-based stabilizer (g) being contained in the PPE-based resin composition (Z), thermal stability during melt-kneading in a manufacturing step and a molding step and during use of the PPE-based resin composition (Z) can be improved, and the flame retardancy of the PPE-based resin composition (Z) can be improved. When a content amount in this range of the phosphorus-based stabilizer (g) is contained in the PPE-based resin composition (Z), the content ratio of the polyphenylene ether-based resin (a) is preferably 90 to 100 mass% and the content ratio of the styrene-based resin (b) is preferably 0 to 10 mass% in 100 mass% of the polyphenylene ether-containing resin (A) in the PPE-based resin composition (Z).

### [Black pigment (h)]

Next, a black pigment (h) used for the PPE-based resin composition (Z) according to the embodiment of the present invention is described in detail. The PPE-based resin composition (Z) may further contain a black pigment (h) in addition to the polyphenylene ether-containing resin (A), the polypropylene homopolymer (c), the inorganic filler (d), etc. described above for the purpose of toning.

Examples of the black pigment (h) include carbon black and carbon nanotubes, thermoplastic resin masterbatches of them, and the like. When the PPE-based resin composition (Z) contains the black pigment (h), the content amount of the black pigment (h) is preferably 2.0 parts by mass or less, more preferably 1.5 parts by mass or less, still more preferably 1.0 part by mass or less, and particularly preferably 0.5 parts by mass or less with respect to 100 parts by mass of the polyphenylene ether-containing resin (A). The lower limit value of the content amount of the black pigment (h) is not particularly specified as long as the toning of the PPE-based resin composition (Z) is possible, but is preferably 0.01 parts by mass or more. By a content amount in this range of the black pigment (h) being contained in the PPE-based resin composition (Z), toning can be performed without impairing the tracking resistance of the PPE-based resin composition (Z) .

### [White pigment (i)]

Next, a white pigment (i) used for the PPE-based resin composition (Z) according to the embodiment of the present invention is described in detail. The PPE-based resin composition (Z) may further contain a white pigment (i) in addition to the polyphenylene ether-containing resin (A), the polypropylene homopolymer (c), the inorganic filler (d), etc. described above for the purpose of toning.

Examples of the white pigment (i) include titanium oxide, zinc sulfide, and the like. When the PPE-based resin composition (Z) contains the white pigment (i), the content amount of the white pigment (i) is preferably 7.0 parts by mass or less, more preferably 4.0 parts by mass or less, still more preferably 3.0 parts by mass or less, and particularly preferably 2.0 parts by mass or less with respect to 100 parts by mass of the polyphenylene ether-containing resin (A). The lower limit value of the content amount of the white pigment (i) is not particularly specified as long as the toning of the PPE-based resin composition (Z) is possible, but is preferably 0.01 parts by mass or more. By a content amount in this range of the white pigment (i) being contained in the PPE-based resin composition (Z), toning can be performed without impairing the mechanical strength of the PPE-based resin composition (Z) .

### [Additives]

Next, additives used for the PPE-based resin composition (Z) according to the embodiment of the present invention are described in detail. The PPE-based resin composition (Z) may contain other additives in addition to components such as the polyphenylene ether-containing resin (A), the polypropylene homopolymer (c), and the inorganic filler (d) described above without departing from the gist of the present invention. Examples of the additive include a tracking inhibitor, a heat stabilizer other than the phosphorus-based stabilizer (g), an ultraviolet absorber, an antioxidant, a weather resistance improver, a foaming agent, a lubricant, a plasticizer, a fluidity improver, a dispersant, a conductive agent, an antistatic agent, a coloring agent other than the black pigment (h) or the white pigment (i), and the like.

Among the above additives, examples of the heat stabilizer other than the phosphorus-based stabilizer (g) include hindered phenol-based compounds, sulfur-based compounds, zinc oxide, etc. For these compounds, one kind may be used singly or two or more kinds may be mixed and used as the heat stabilizer.

Specific examples of the hindered phenol-based compound include n-octadecyl 3-(3',5'-di-t-butyl-4'-hydroxyphenyl)propionate, 1,6-hexanediol-bis[3-(3',5'-di-t-butyl-4'-hydroxyphenyl)propionate], pentaerythritol-tetrakis[3-(3',5'-di-t-butyl-4'-hydroxyphenyl)propionate], 2,6-di-t-butyl-4-methylphenol, 3,9-bis[1,1-dimethyl-2-{β-(3-t-butyl-4-hydroxy-5-methylphenyl)propionyloxy}ethyl]-2,4,8,10-tetraoxaspiro[5,5]undecane, triethylene glycol-bis[3-(3-t-butyl-5-methyl-4-hydroxyphenyl)propionate], 3,5-di-t-butyl-4-hydroxybenzylphosphonate-diethyl ester, 1,3,5-trimethyl-2,4,6-tris(3',5'-di-t-butyl-4'-hydroxybenzyl)benzene, 2,2-thio-diethylene bis[3-(3',5'-dit-butyl-4'-hydroxyphenyl)propionate], tris(3,5-di-t-butyl-4-hydroxybenzyl) isocyanurate, N,N'-hexamethylenebis(3,5-di-t-butyl-4-hydroxy-hydrocinnamide), and the like. Among them, n-octadecyl 3-(3',5'-di-t-butyl-4'-hydroxyphenyl)propionate, 1,6-hexanediol-bis[3-(3',5'-di-t-butyl-4'-hydroxyphenyl)propionate], 2,6-di-t-butyl-4-methylphenol, and 3,9-bis[1,1-dimethyl-2-{β-(3-t-butyl-4-hydroxy-5-methylphenyl)propionyloxy}ethyl]-2,4,8,10-tetraoxaspiro[5,5]undecane are preferable.

Specific examples of the sulfur-based compound include didodecyl thiodipropionate, ditetradecyl thiodipropionate, dioctadecyl thiodipropionate, pentaerythritol tetrakis(3-dodecylthiopropionate), pentaerythrityl tetrakis(3-tetradecylthiopropionate), pentaerythrityl tetrakis(3-tridecylthiopropionate), thiobis(N-phenyl-β-naphthylamine), 2-mercaptobenzothiazole, 2-mercaptobenzimidazole, tetramethylthiuram monosulfide, tetramethylthiuram disulfide, nickel dibutyldithiocarbamate, nickel isopropylxanthate, trilauryl trithiophosphite, and the like. Among them, in particular, a thioether-based antioxidant having a thioether structure can be suitably used as the heat stabilizer because it receives oxygen from an oxidized substance to reduce the substance. The lower limit of the molecular weight of the sulfur-based compound is usually 200 or more, and preferably 500 or more. The upper limit of the molecular weight of the sulfur-based compound is usually 3000 or less.

As the zinc oxide, for example, zinc oxide having an average particle diameter of 0.02 to 1 µm is preferable, and zinc oxide having an average particle diameter of 0.08 to 0.8 µm is more preferable.

For example, when the PPE-based resin composition (Z) contains the heat stabilizer, the content amount of the heat stabilizer is preferably 0.001 to 1 part by mass, more preferably 0.01 to 0.7 parts by mass, and still more preferably 0.02 to 0.5 parts by mass with respect to 100 parts by mass of the polyphenylene ether-containing resin (A). By the lower limit of the content amount of the heat stabilizer being 0.001 parts by mass or more, the effect of improving the thermal stability of the PPE-based resin composition (Z) can be obtained sufficiently. Further, by the upper limit of the content amount of the heat stabilizer being 1 part by mass or less, the occurrence of contamination of a mold at the time of molding the PPE-based resin composition (Z), a reduction in mechanical strength of the PPE-based resin composition (Z), etc. can be prevented.

The PPE-based resin composition (Z) may contain one of additives like the above, or may contain an additive in which two or more of them are blended. The PPE-based resin composition (Z) can effectively exhibit the function of each additive contained therein. For example, when a weather resistance improver and a tracking inhibitor are blended in the PPE-based resin composition (Z), the weather resistance and the tracking resistance of the PPE-based resin composition (Z) can be exhibited.

### [Method for manufacturing PPE-based resin composition (Z)]

Next, a method for manufacturing the PPE-based resin composition (Z) according to the embodiment of the present invention is described in detail. The method for manufacturing the PPE-based resin composition (Z) is not limited to a specific method, and a known method can be employed. Examples of the manufacturing method include a melt-kneading method in which various components to be blended as necessary, such as the polyphenylene ether-containing resin (A), the polypropylene homopolymer (c), and the inorganic filler (d) described above, are melt-kneaded by a kneader and are then cooled and solidified, a solution mixing method in which the above various components are added to an appropriate solvent and soluble components or soluble components and insoluble components are mixed in a suspension state, and the like. Examples of the kneader used in the manufacturing method include a single-screw kneading extruder, a multi-screw kneading extruder, a Banbury mixer, a roll, a Brabender plastogram, and the like. Examples of the solvent include hydrocarbons such as hexane, heptane, benzene, toluene, and xylene, derivatives thereof, and the like.

From the viewpoint of industrial cost, the melt-kneading method is preferable as the method for manufacturing the PPE-based resin composition (Z). In the melt-kneading method, the kneading temperature and the kneading time can be arbitrarily selected according to conditions such as desired types of the PPE-based resin composition (Z) and the kneader. For example, the kneading temperature is preferably 200 to 350°C, and more preferably 220 to 320°C. The kneading time is preferably 20 minutes or less. If the kneading temperature is higher than 350°C, thermal deterioration of the polyphenylene ether-based resin (a) or the styrene-based resin (b) contained in the polyphenylene ether-containing resin (A) may occur. As a result, in a molded article of the PPE-based resin composition (Z), a reduction in physical properties or defective external appearance may occur.

### [Molded article]

Next, a molded article according to an embodiment of the present invention is described in detail. The molded article according to the embodiment of the present invention is a molded article made of the PPE-based resin composition (Z) described above, and can be manufactured by, for example, molding pellets obtained by pelletizing the PPE-based resin composition (Z) by various molding methods. The molded article may be manufactured by directly molding the PPE-based resin composition (Z) melt-kneaded by a kneader without forming pellets mentioned above.

The method for molding the PPE-based resin composition (Z) is not limited to a specific method, and a known method can be employed. Examples of the method for molding the PPE-based resin composition (Z) include various molding methods such as injection molding, injection compression molding, hollow molding, extrusion molding, sheet molding, thermoforming, rotational molding, laminate molding, and press molding.

Since the molded article manufactured by the above molding method is made of the PPE-based resin composition (Z) according to the embodiment of the present invention, the molded article has excellent properties of various components contained in the PPE-based resin composition (Z). In particular, the molded article has both high mechanical strength due to the inorganic filler (d), etc. and high tracking resistance due to the polypropylene homopolymer (c), etc. while retaining excellent heat resistance and processability due to the polyphenylene ether-based resin (a), the styrene-based resin (b), etc. Furthermore, in addition to the above properties, the molded article can have high flame retardancy due to the flame retardant (e), etc. and excellent properties such as low specific gravity, high dimensional accuracy, hydrolysis resistance, dimensional stability, and mechanical properties. Such a molded article can be widely used for various uses such as automobile-related components, electronic device-related components, and battery-related components.

Specific examples of the automobile-related component for which the molded article according to the embodiment of the present invention is used include an exterior component, an outer plate component, an interior component, an under hood component, and the like for automobiles. More specifically, examples of the exterior component or the outer plate component for automobiles include components such as a bumper, a fender, a door panel, a lace, an emblem, an engine hood, a wheel cover, a roof, a spoiler, and an engine cover. Examples of the interior component for automobiles include an instrument panel, a console box trim, and the like.

Examples of the electronic device-related component for which the molded article according to the embodiment of the present invention is used include a computer component, a computer peripheral device component, an OA device component, a television component, a videocassette recorder component, and various disc player components, cabinets and chassis for these electronic devices, a refrigerator component, an air conditioning device component, a liquid crystal projector component, and the like.

Examples of the battery-related component for which the molded article according to the embodiment of the present invention is used include components such as a battery unit housing, an electrolytic bath for a secondary battery, a fuel case for a direct methanol fuel cell, and a water supply pipe for a fuel cell.

The molded article according to the embodiment of the present invention can be used also for components in fields (other fields) other than the automobile-related, electronic device-related, or battery-related field described above. Examples of components in the other fields include tanks for water cooling, exterior cases for boilers, ink peripheral components/members and chassis of inkjet printers, and the like. Besides these, the molded article according to the embodiment of the present invention can be used for a water supply pipe, a molded body such as a joint, a separator for a lithium ion battery obtained by stretching a sheet or a film, and the like.

As described hereinabove, the PPE-based resin composition (Z) according to the embodiment of the present invention contains a polyphenylene ether-containing resin (A) containing a polyphenylene ether-based resin (a) or containing a polyphenylene ether-based resin (a) and a styrene-based resin (b), and contains 2 to 20 parts by mass of a polypropylene homopolymer (c) and 1 to 25 parts by mass of an inorganic filler (d) with respect to 100 parts by mass of the polyphenylene ether-containing resin (A). Thus, excellent heat resistance, processability (moldability), and mechanical properties due to the polyphenylene ether-based resin (a) and the styrene-based resin (b) can be obtained, mechanical strength can be enhanced by the inorganic filler (d), and tracking resistance, which could be reduced due to the inorganic filler (d), can be improved by the polypropylene homopolymer (c). As a result, the PPE-based resin composition (Z) can achieve both high mechanical strength and high tracking resistance while retaining excellent heat resistance.

The PPE-based resin composition (Z) according to the embodiment of the present invention further contains 5 to 35 parts by mass of a flame retardant (e) with respect to 100 parts by mass of the polyphenylene ether-containing resin (A). Thereby, flame retardancy, which could be reduced due to the polypropylene homopolymer (c) described above, can be improved by the flame retardant (e). As a result, the PPE-based resin composition (Z) can have excellent flame retardancy while enjoying the effect of improving tracking resistance by the polypropylene homopolymer (c) described above.

The PPE-based resin composition (Z) according to the embodiment of the present invention further contains 0.5 to 50 parts by mass of a flame retardant aid (f) with respect to 100 parts by mass of the polyphenylene ether-containing resin (A). Thereby, tracking resistance, which could be reduced due to the inorganic filler (d) or the flame retardant (e) described above, can be improved by the polypropylene homopolymer (c) and the flame retardant aid (f), and flame retardancy can be improved by the flame retardant aid (f). As a result, the PPE-based resin composition (Z) can have more excellent flame retardancy while retaining high tracking resistance.

Further, by molding processing of the PPE-based resin composition (Z) described above, a molded article enjoying the effect of the PPE-based resin composition (Z) can be easily obtained. Such a molded article can have various properties (heat resistance, tracking resistance, mechanical strength, etc.) required according to the use by selecting constituent components of the PPE-based resin composition (Z) as a material.

### [Examples]

The present invention will now be described more specifically by showing Examples. Note that the present invention should not be construed as being limited to the following Examples.

### (Examples 1 to 43 and Comparative Examples 1 to 9)

### [Components of polyphenylene ether-based resin composition]

The components of a polyphenylene ether-based resin composition (PPE-based resin composition) in each of Examples 1 to 43 and Comparative Examples 1 to 9 are as shown in Tables 1-1 to 1-3. In each of Examples 1 to 43, the polyphenylene ether-based resin (a), the styrene-based resin (b), the polypropylene homopolymer (c), the inorganic filler (d), the flame retardant (e), the flame retardant aid (f), the phosphorus-based stabilizer (g), another stabilizer (k), the black pigment (h), and the white pigment (i) shown in Tables 1-1 and 1-2 are used as necessary. The other stabilizer (k) is an example of an additive added to the PPE-based resin composition (Z) described above as necessary. In each of Comparative Examples 1 to 9, the components shown in Tables 1-1 and 1-2 and a polyolefin (x) shown in Table 1-3 are used as necessary. The polyolefin (x) is a polyolefin other than the polypropylene homopolymer (c), and is used instead of the polypropylene homopolymer (c).

As the polyphenylene ether-based resin (a), component (a-1) or component (a-2) shown in Table 1-1 is used. As the styrene-based resin (b), component (b-1), component (b-2), or component (b-3) shown in Table 1-1 is used. As the polypropylene homopolymer (c), component (c-1), component (c-2), component (c-3), component (c-4), component (c-5), or component (c-6) shown in Table 1-1 is used. As the inorganic filler (d), component (d-1), component (d-2), component (d-3), or component (d-4) shown in Table 1-1 is used. As the flame retardant (e), component (e-1) or component (e-2) shown in Table 1-2 is used. As the flame retardant aid (f), component (f-1), component (f-2), component (f-3), component (f-4), component (f-5), or component (f-6) shown in Table 1-2 is used. As the phosphorus-based stabilizer (g), component (g-1) shown in Table 1-2 is used. As the other stabilizer (k), component (k-1) shown in Table 1-2, that is, a heat stabilizer other than the phosphorus-based stabilizer (g) is used. As the black pigment (h), component (h-1) shown in Table 1-2 is used. As the white pigment (i), component (i-1) or component (i-2) shown in Table 1-2 is used. As the polyolefin (x), component (x-1), component (x-2), component (x-3), component (x-4), component (x-5), or component (x-6) shown in Table 1-3 is used.

The MFR written in Tables 1-1 and 1-3 is a melt flow rate measured according to JIS K 7210. Among the measurement conditions of the MFR, the temperature is as shown in Tables 1-1 and 1-3. Although not shown in Table 1-1 or 1-3, the load is 2.16 kg.

**Table 1-1**

| Component category | Code | Product name | Details |
|---|---|---|---|
| Polyphenylene ether-based resin (a) | (a-1) | PX100F | Polyphenylene ether resin, manufactured by Polyxylenol Singapore Pte Ltd. |
| | (a-2) | PX100L | Polyphenylene ether resin, manufactured by Polyxylenol Singapore Pte Ltd. |
| Styrene-based resin (b) | (b-1) | PSJ-Polystyrene HIPSHT 478 | High-impact polystyrene, manufactured by PS Japan Corporation |
| | (b-2) | KAOFULEX HPS-850R | High-impact polystyrene, manufactured by Kaofu Chemical Corporation |
| | (b-3) | TOYO STYROL HIH350 | High-impact polystyrene, manufactured by Toyo Styrene Co.,Ltd. |
| Polypropylene homopolymer (c) | (c-1) | NOVATEC PPMA3Q | Polypropylene homopolymer, manufactured by Japan Polypropylene Corporation, MFR at temperature of 230°C = 11.0g/10min |
| | (c-2) | NOVATEC PPMH4 | Polypropylene homopolymer manufactured by Japan Polypropylene Corporation, MFR at temperature of 230°C = 5.0g/10min |
| | (c-3) | NOVATEC PPMA2 | Polypropylene homopolymer manufactured by Japan Polypropylene Corporation, MFR at temperature of 230°C = 16.0g/10min |
| | (c-4) | NOVATEC PPMA1B | Polypropylene homopolymer, manufactured by Japan Polypropylene Corporation, MFR at temperature of 230°C = 21.0g/10min |
| | (c-5) | NOVATEC PPMAFY6 | Polypropylene homopolymer, manufactured by Japan Polypropylene Corporation, MFR at temperature of 230°C = 2.4g/10min |
| | (c-6) | NOVATEC PPMASA04M | Polypropylene homopolymer, manufactured by Japan Polypropylene Corporation, MFR at temperature of 230°C = 40.0g/10min |
| Inorganic filler (d) | (d-1) | ECS 03T-852H | Glass fiber, manufactured by Nippon Electric Glass Co., Ltd., diameter: 10µm, length: 3mm |
| | (d-2) | RH215 | Talc, manufactured by Fuji Talc Industrial Co., Ltd., median diameter: 15µm |
| | (d-3) | A-11 | Muscovite, manufactured by Yamaguchi Mica Co., Ltd., average particle diameter: 3µm |
| | (d-4) | S-XF | Phlogopite, manufactured by Repco Inc., average particle diameter: 3µm |

**Table 1-2**

| Component category | Code | Product name | Details |
|---|---|---|---|
| Flame retardant (e) | (e-1) | CR-733S | Condensed phosphoric acid ester flame retardant, manufactured by Daihachi Chemical Industry Co., Ltd. |
| | (e-2) | TPP | Phosphoric acid ester flame retardant, manufactured by Daihachi Chemical Industry Co., Ltd. |
| Flame retardant aid (f) | (f-1) | CALCITEC VIGOT-15 | Fatty acid-surface treated calcium carbonate, manufactured by Shiraishi Kogyo Kaisha, Ltd., average particle diameter: 0.2µm |
| | (f-2) | MAGSEEDS V6 | Vinylsilane-surface treated magnesium hydroxide, manufactured by Konoshima Chemical Co., Ltd., average particle diameter: 1.0µm |
| | (f-3) | MAGSEEDS N6 | Higher fatty acid-surface treated magnesium hydroxide, manufactured by Konoshima Chemical Co., Ltd., average particle diameter: 1.1 µm |
| | (f-4) | KW2200 | Hydrotalcite, manufactured by Kyowa Chemical Industry Co., Ltd. |
| | (f-5) | MC-4000 | Melamine cyanurate, manufactured by Nissan Chemical Corporation, average particle diameter: 14µm or less |
| | (f-6) | FireBrakeZB | Particulate zinc borate, manufactured by U.S. Borax Inc., median diameter: 9µm |
| Phosphorus-based stabilizer (g) | (g-1) | ADEKASTAB 2112 | Phosphorus-based heat stabilizer, manufactured by ADEKA Corporation |
| Other stabilizer (k) | (k-1) | Irganox1010 | Hindered phenol-based stabilizer, manufactured by BASF Japan Ltd. |
| Black pigment (h) | (h-1) | BLACK-SBF M8800 | Black pigment polystyrene masterbatches, manufactured by Resino Color Industry Co.,Ltd., content amount of carbon black: 45 to 55 mass% |
| White pigment (i) | (i-1) | TIOXIDER-TC30 | White pigment (titanium oxide), manufactured by Venator Materials PLC. |
| | (i-2) | SACHTOLITH HD-S | White pigment (zinc sulfide), manufactured by Sachtolith, average particle diameter: 0.2 to 0.3µm |

**Table 1-3**

| Component category | Code | Product name | Details |
|---|---|---|---|
| Polyolefin (x) | (x-1) | NOVATEC HDHY340 | High-density polyethylene resin, manufactured by Japan Polyethylene Corporation, MFR at temperature of 190°C = 1.4g/10min |
| | (x-2) | NOVATEC HDHJ560 | High-density polyethylene resin, manufactured by Japan Polyethylene Corporation, MFR at temperature of 190°C = 7.0g/10min |
| | (x-3) | NOVATEC HDHJ580 | High-density polyethylene resin, manufactured by Japan Polyethylene Corporation, MFR at temperature of 190°C = 12.0g/10min |
| | (x-4) | TAFMER XM-5070 | Propylene-butene copolymer, manufactured by Mitsui Chemicals, Inc., MFR at temperature of 230°C = 7.0g/10min |
| | (x-5) | TAFMER P-0180 | Ethylene-propylene copolymer, manufactured by Mitsui Chemicals, Inc., MFR at temperature of 230°C = 8.1g/10min |
| | (x-6) | TAFMER DF940 | Ethylene-butene copolymer, manufactured by Mitsui Chemicals, Inc., MFR at temperature of 230°C = 6.7g/10min |

### [Method for manufacturing pellets of PPE-based resin composition]

In each of Examples 1 to 43 and Comparative Examples 1 to 9, the respective components shown in Tables 1-1 to 1-3 above were mixed at the ratios (parts by mass) shown in Tables 2-1 to 2-7 described later, and the mixture of the respective components was melt-kneaded using a twin screw extruder (TEM 18 SS manufactured by Shibaura Machine Co., Ltd) with the cylinder temperature set to 280°C and the screw rotation rate set to 350 rpm. Thereby, a PPE-based resin composition was prepared. After that, a strand of the PPE-based resin composition was extruded, and the extruded strand was cut (pelletized) to obtain pellets of the PPE-based resin composition.

### [Method for manufacturing molded article of PPE-based resin composition]

In each of Examples 1 to 43 and Comparative Examples 1 to 9, pellets of the PPE-based resin composition described above were dried at 80°C for 2 hours, were then supplied to an injection molding machine (EC 75 SX manufactured by Shibaura Machine Co., Ltd), and were injection-molded by the injection molding machine according to a molding method according to ISO 15103 to obtain an ISO 3167 type A test piece (hereinafter, referred to as an ISO test piece). As conditions for the injection molding, the cylinder temperature was set to 280°C, and the mold temperature was set to 70°C.

Further, in each of Examples 1 to 43 and Comparative Examples 1 to 9, the pellets after drying described above were supplied to an injection molding machine (NEX 80-9 E manufactured by Nissei Plastic Industrial Co., Ltd.), and a molded article made of the PPE-based resin composition and having a size of length × width × thickness = 60 mm × 60 mm × 3 mm was produced by the injection molding machine. The cylinder temperature and the mold temperature during the injection molding are the same as in the case of the ISO test piece described above.

### [Evaluation of tracking resistance]

In each of Examples 1 to 43 and Comparative Examples 1 to 9, tracking resistance was evaluated for the molded article of the PPE-based resin composition described above. Specifically, using the molded article having a size of length × width × thickness = 60 mm × 60 mm × 3 mm produced as described above, the maximum voltage at which tracking breakdown of the molded article did not occur, that is, the CTI value (unit: V) was measured by a measurement method according to IEC 60112 (the electrolytic solution used: solution A, the number of drops: 50).

### [Evaluation of mechanical strength]

In each of Examples 1 to 43 and Comparative Examples 1 to 9, mechanical strength was evaluated for the molded article of the PPE-based resin composition described above. Specifically, using the ISO test piece produced as described above, tensile strength (unit: MPa) and tensile fracture strain (unit: %) were measured in an environment of a temperature of 23°C and a humidity of 50% by a measurement method according to ISO 527.

### [Evaluation of heat resistance]

In each of Examples 1 to 43 and Comparative Examples 1 to 9, heat resistance was evaluated for the molded article of the PPE-based resin composition described above. Specifically, a parallel portion of the ISO test piece described above was machined to produce a strip-shaped test piece of length × width × thickness = 80 mm × 10 mm × 4 mm, and using this test piece, deflection temperature under load (unit: °C) was measured under the condition of a load of 1.80 MPa by a measurement method according to ISO 75-2.

### [Evaluation of flame retardancy]

In each of Examples 1 to 43 and Comparative Examples 1 to 9, flame retardancy was evaluated for the molded article of the PPE-based resin composition described above. Specifically, pellets of the PPE-based resin composition obtained as described above were dried at 80°C for 2 hours and were then supplied to an injection molding machine (EC 75 SX manufactured by Shibaura Machine Co., Ltd), and a test piece for a flammability test made of the PPE-based resin composition and having a size of length × width × thickness = 125 mm × 13 mm × 1.5 mm was molded by the injection molding machine. As conditions for the injection molding, the cylinder temperature was set to 280°C, and the mold temperature was set to 70°C.

Next, the test piece for a flammability test obtained as above was subjected to a vertical flammability test according to the UL 94 standard (a UL 94 V test, 1.5 mmt). In the evaluation of flame retardancy in each of Examples 1 to 43 and Comparative Examples 1 to 9, a grade based on the vertical flammability test was determined, and the case of not satisfying the grade was determined as poor (NG). The grade is classified into V-0, V-1, and V-2 in descending order.

### [Evaluation results]

The content ratios (parts by mass) of the respective components of the PPE-based resin composition in each of Examples 1 to 43 and Comparative Examples 1 to 9 and the results of the above evaluations are shown in Tables 2-1 to 2-7. The "DTUL" in Tables 2-1 to 2-7 means the deflection temperature under load described above.

In Examples 1 to 43, as shown in Tables 2-1 to 2-6, evaluation results of tracking resistance, mechanical strength, flame retardancy, and heat resistance were obtained. Specifically, the CTI values shown in Tables 2-1 to 2-6 were obtained as the evaluation results of tracking resistance in Examples 1 to 43. In all of Examples 1 to 43, the CTI value was 400 V or more. In particular, in Examples 1 to 8 and 11 to 43, the CTI value was 550 V or more, and among them, in Examples 2 to 4, 7, 8, 11 to 18, 21, 23 to 27, and 29 to 43, the CTI value was 575 V or more. Further, the values of tensile strength and tensile fracture strain shown in Tables 2-1 to 2-6 were obtained as the evaluation results of mechanical strength in Examples 1 to 43. In particular, the tensile strength was 59 MPa or more in all of Examples 1 to 43, and among them, in Examples 1 to 42, the tensile strength was 60 MPa or more. Thus, in all of Examples 1 to 43, both high tracking resistance of CTI value ≥ 400 V and high mechanical strength of tensile strength ≥ 59 MPa were achieved successfully.

In the evaluation results of flame retardancy, "NG" was given to, among Examples 1 to 43, only Example 6, in which no flame retardant aid (f) (none of components (f-1) to (f-6)) was contained in the PPE-based resin composition, and Example 28, in which no flame retardant (e) (neither of components (e-1) and (e-2)) was contained in the PPE-based resin composition, and the grade "V-1" based on the UL 94 V test was satisfied in all the other Examples 1 to 5, 7 to 27, and 29 to 43. Among them, in Examples 18, 29, 30, and 40 to 42, the grade "V-0" was satisfied. Further, the DTULs shown in Tables 2-1 to 2-6 were obtained as the evaluation results of heat resistance in Examples 1 to 43. In all of Examples 1 to 43, the DTUL was 100°C or more, and excellent heat resistance was retained successfully.

On the other hand, as shown in Table 2-7, the PPE-based resin composition of Comparative Example 1 is a resin composition in which the polypropylene homopolymer (c) (component (c-2)) is contained but the inorganic filler (d) is not contained. In such Comparative Example 1, the CTI value indicating tracking resistance was 400 V or more, but the tensile strength indicating mechanical strength was less than 59 MPa. The PPE-based resin composition of Comparative Example 8 is a resin composition in which more than 20 parts by mass of the polypropylene homopolymer (c) (component (c-2)) is contained. In such Comparative Example 8, the CTI value indicating tracking resistance was 400 V or more, but the tensile strength indicating mechanical strength was less than 59 MPa. The PPE-based resin composition of Comparative Example 9 is a resin composition in which the content amount of the polypropylene homopolymer (c) is 20 parts by mass or less but more than 25 parts by mass of the inorganic filler (d) (component (d-1)) is contained. In such Comparative Example 9, the tensile strength indicating mechanical strength was 59 MPa or more, but the CTI value indicating tracking resistance was less than 400 V.

As shown in Table 2-7, the PPE-based resin composition of each of Comparative Examples 2 to 7 is a resin composition in which the polyolefin (x) (any of components (x-1) to (x-6)) is contained instead of the polypropylene homopolymer (c). Each of such Comparative Examples 2 to 7 corresponds to at least one of "the CTI value being less than 400 V" and "the tensile strength being less than 59 MPa", and failed to achieve both high tracking resistance of CTI value ≥ 400 V and high mechanical strength of tensile strength ≥ 59 MPa.

For the evaluation results of flame retardancy, Comparative Examples 1 to 4, 6, and 7 satisfied the grade "V-1" based on the UL 94 V test, but Comparative Examples 5, 8, and 9 were "NG". For the evaluation results of heat resistance, the DTUL was 100°C or more in Comparative Examples 2 to 9, but the DTUL was less than 100°C in Comparative Example 1.

**Table 2-1**

| | Component (code) | Example 1 | Example 2 | Example 3 | Example 4 | Example 5 | Example 6 | Example 7 |
|---|---|---|---|---|---|---|---|---|
| Composition of PPE-based resin composition (parts by mass) | (a-1) | 66.0 | 66.0 | 66.0 | 66.0 | | 65.2 | 66.0 |
| | (a-2) | | | | | 66.0 | | |
| | (b-1) | 34.0 | | | 34.0 | 34.0 | 34.8 | 34.0 |
| | (b-2) | | 34.0 | | | | | |
| | (b-3) | | | 34.0 | | | | |
| | (c-1) | 9.6 | 9.6 | 9.6 | | | | |
| | (c-2) | | | | 9.6 | 9.6 | 9.1 | |
| | (c-3) | | | | | | | 9.6 |
| | (c-4) | | | | | | | |
| | (c-5) | | | | | | | |
| | (c-6) | | | | | | | |
| | (x-1) | | | | | | | |
| | (x-2) | | | | | | | |
| | (x-3) | | | | | | | |
| | (x-4) | | | | | | | |
| | (x-5) | | | | | | | |
| | (x-6) | | | | | | | |
| | (d-1) | 6.9 | 6.9 | 6.9 | 6.9 | 6.9 | 6.5 | 6.9 |
| | (d-2) | | | | | | | |
| | (d-3) | | | | | | | |
| | (d-4) | | | | | | | |
| | (e-1) | 15.1 | 15.1 | 15.1 | 15.1 | 15.1 | 14.3 | 15.1 |
| | (e-2) | | | | | | | |
| | (f-1) | 2.7 | 2.7 | 2.7 | 2.7 | 2.7 | | 2.7 |
| | (f-2) | | | | | | | |
| | (f-3) | | | | | | | |
| | (f-4) | | | | | | | |
| | (f-5) | | | | | | | |
| | (f-6) | | | | | | | |
| | (g-1) | | | | | | | |
| | (k-1) | 0.10 | 0.10 | 0.10 | 0.10 | 0.10 | 0.09 | 0.10 |
| | (h-1) | 0.14 | 0.14 | 0.14 | 0.14 | 0.14 | 0.13 | 0.14 |
| | (i-1) | 1.4 | 1.4 | 1.4 | 1.4 | 1.4 | | 1.4 |
| | (i-2) | 1.4 | 1.4 | 1.4 | 1.4 | 1.4 | | 1.4 |
| Mass ratio ((d)/(c)) | | 0.71 | 0.71 | 0.71 | 0.71 | 0.71 | 0.71 | 0.71 |
| Evaluation results | Tracking resistance CTI value(V) | 550 | 575 | >600 | 575 | 550 | 550 | 575 |
| | Tensile strength (MPa) | 62.3 | 61.7 | 61.9 | 62.1 | 61.1 | 66.8 | 60.8 |
| | Tensile fracture strain(%) | 3.6 | 3.6 | 3.3 | 3.6 | 3.2 | 3.7 | 3.7 |
| | Flame retardancy (UL94V test) | V-1 | V-1 | V-1 | V-1 | V-1 | NG | V-1 |
| | DTUL(°C) | 107 | 103 | 104 | 104 | 108 | 109 | 108 |

**Table 2-2**

| | Component (code) | Example 8 | Example 9 | Example 10 | Example 11 | Example 12 | Example 13 | Example 14 |
|---|---|---|---|---|---|---|---|---|
| Composition of PPE-based resin composition (parts by mass) | (a-1) | 66.0 | 66.0 | 65.6 | 65.2 | 73.3 | 65.4 | 66.0 |
| | (a-2) | | | | | | | |
| | (b-1) | 34.0 | 34.0 | 34.4 | 34.8 | 26.7 | 34.6 | 34.0 |
| | (b-2) | | | | | | | |
| | (b-3) | | | | | | | |
| | (c-1) | | | | | | | |
| | (c-2) | | | 6.7 | 6.5 | 6.5 | 6.6 | 4.5 |
| | (c-3) | | | | | | | |
| | (c-4) | 9.6 | | | | | | |
| | (c-5) | | 9.6 | | | | | |
| | (c-6) | | | | | | | |
| | (x-1) | | | | | | | |
| | (x-2) | | | | | | | |
| | (x-3) | | | | | | | |
| | (x-4) | | | | | | | |
| | (x-5) | | | | | | | |
| | (x-6) | | | | | | | |
| | (d-1) | 6.9 | 6.9 | 6.7 | 6.5 | 6.5 | 6.6 | 6.4 |
| | (d-2) | | | | | | | |
| | (d-3) | | | | | | | |
| | (d-4) | | | | | | | |
| | (e-1) | 15.1 | 15.1 | 14.7 | 14.3 | 14.3 | 15.8 | 14.0 |
| | (e-2) | | | | | | | |
| | (f-1) | 2.7 | 2.7 | 2.7 | 2.6 | 2.6 | 2.6 | 2.6 |
| | (f-2) | | | | | | | |
| | (f-3) | | | | | | | |
| | (f-4) | | | | | | | |
| | (f-5) | | | | | | | |
| | (f-6) | | | | | | | |
| | (g-1) | | | | | | | |
| | (k-1) | 0.10 | 0.10 | 0.09 | 0.09 | 0.09 | 0.09 | 0.09 |
| | (h-1) | 0.14 | 0.14 | 0.13 | 0.13 | 0.13 | 0.13 | 0.13 |
| | (i-1) | 1.4 | 1.4 | 1.3 | | | | |
| | (i-2) | 1.4 | 1.4 | 1.3 | | | | |
| Mass ratio((d)/(c)) | | 0.71 | 0.71 | 1.00 | 1.00 | 1.00 | 1.00 | 1.43 |
| Evaluation results | Tracking resistance CTI value(V) | 575 | 475 | 525 | 575 | 575 | >600 | 575 |
| | Tensile strength (MPa) | 60.6 | 61.0 | 61.7 | 68.0 | 72.5 | 67.7 | 69.2 |
| | Tensile fracture strain (%) | 3.9 | 4.0 | 4.1 | 5.0 | 4.2 | 4.3 | 4.5 |
| | Flame retardancy (UL94V test) | V-1 | V-1 | V-1 | V-1 | V-1 | V-1 | V-1 |
| | DTUL(°C) | 108 | 108 | 106 | 112 | 117 | 108 | 112 |

**Table 2-3**

| | Component (code) | Example 15 | Example 16 | Example 17 | Example 18 | Example 19 | Example 20 | Example 21 |
|---|---|---|---|---|---|---|---|---|
| Composition of PPE-based resin composition (parts by mass) | (a-1) | 66.0 | 68.0 | 73.0 | 73.0 | 74.0 | 74.0 | 75.0 |
| | (a-2) | | | | | | | |
| | (b-1) | 34.0 | 32.0 | 27.0 | 27.0 | 26.0 | 26.0 | 25.0 |
| | (b-2) | | | | | | | |
| | (b-3) | | | | | | | |
| | (c-1) | | 4.0 | | | | | |
| | (c-2) | 2.5 | 4.0 | 8.3 | 8.7 | 6.3 | 6.2 | 14.9 |
| | (c-3) | | | | | | | |
| | (c-4) | | | | | | | |
| | (c-5) | | | | | | | |
| | (c-6) | | | | | | | |
| | (x-1) | | | | | | | |
| | (x-2) | | | | | | | |
| | (x-3) | | | | | | | |
| | (x-4) | | | | | | | |
| | (x-5) | | | | | | | |
| | (x-6) | | | | | | | |
| | (d-1) | 6.3 | 6.6 | 6.9 | 7.3 | 6.3 | 6.2 | 7.4 |
| | (d-2) | | | | | | | |
| | (d-3) | | | | | | | |
| | (d-4) | | | | | | | |
| | (e-1) | 15.2 | 14.5 | 18.0 | 18.9 | 11.4 | 9.0 | 22.0 |
| | (e-2) | | | | | | | |
| | (f-1) | 2.5 | 2.6 | 5.0 | 10.0 | 2.5 | 2.5 | 2.9 |
| | (f-2) | | | | | | | |
| | (f-3) | | | | | | | |
| | (f-4) | | | | | | | |
| | (f-5) | | | | | | | |
| | (f-6) | | | | | | | |
| | (g-1) | | | | | | | |
| | (k-1) | 0.09 | 0.09 | 0.10 | 0.10 | 0.09 | 0.09 | 0.10 |
| | (h-1) | 0.13 | 0.13 | 0.14 | 0.15 | 0.13 | 0.12 | 0.15 |
| | (i-1) | | | | | | | |
| | (i-2) | | | | | | | |
| Mass ratio((d)/(c)) | | 2.50 | 0.83 | 0.83 | 0.83 | 1.00 | 1.00 | 0.50 |
| Evaluation results | Tracking resistance CTI value(V) | 575 | 575 | 575 | >600 | 550 | 550 | >600 |
| | Tensile strength(MPa) | 69.1 | 69.2 | 70.4 | 68.7 | 73.5 | 73.4 | 68.9 |
| | Tensile fracture strain (%) | 4.7 | 3.8 | 3.9 | 3.7 | 4.3 | 4.0 | 3.5 |
| | Flame retardancy (UL94V test) | V-1 | V-1 | V-1 | V-0 | V-1 | V-1 | V-1 |
| | DTUL(°C) | 110 | 113 | 110 | 108 | 125 | 131 | 104 |

**Table 2-4**

| | Component (code) | Example 22 | Example 23 | Example 24 | Example 25 | Example 26 | Example 27 | Example 28 |
|---|---|---|---|---|---|---|---|---|
| Composition of PPE-based resin composition (parts by mass) | (a-1) | 70.0 | 75.0 | 75.0 | 75.0 | 75.0 | 90.0 | 70.0 |
| | (a-2) | | | | | | | |
| | (b-1) | 30.0 | 25.0 | 25.0 | 25.0 | 25.0 | 10.0 | 30.0 |
| | (b-2) | | | | | | | |
| | (b-3) | | | | | | | |
| | (c-1) | | | | | | | |
| | (c-2) | 13.7 | 15.4 | 16.7 | 14.9 | 9.5 | 15.7 | 8.1 |
| | (c-3) | | | | | | | |
| | (c-4) | | | | | | | |
| | (c-5) | | | | | | | |
| | (c-6) | | | | | | | |
| | (x-1) | | | | | | | |
| | (x-2) | | | | | | | |
| | (x-3) | | | | | | | |
| | (x-4) | | | | | | | |
| | (x-5) | | | | | | | |
| | (x-6) | | | | | | | |
| | (d-1) | 7.6 | 7.7 | 8.4 | 8.2 | 7.9 | 7.8 | 5.8 |
| | (d-2) | 7.6 | 7.7 | 8.4 | 8.2 | | | |
| | (d-3) | | | | | | | |
| | (d-4) | | | | | | | |
| | (e-1) | 19.7 | 20.1 | 23.4 | 23.1 | 20.6 | 30.0 | |
| | (e-2) | | | | | | | |
| | (f-1) | 3.0 | 3.1 | 10.0 | 10.0 | 19.9 | 3.1 | 2.3 |
| | (f-2) | | | | | | | |
| | (f-3) | | | | | | | |
| | (f-4) | | | | | | | |
| | (f-5) | | | | | | | |
| | (f-6) | | | | | | | |
| | (g-1) | | | | | | | |
| | (k-1) | 0.11 | 0.11 | 0.12 | 0.12 | 0.11 | 0.11 | 0.08 |
| | (h-1) | 0.14 | 0.15 | 0.13 | 0.13 | 0.16 | 0.16 | |
| | (i-1) | | | | | | | |
| | (i-2) | | | | | | | |
| Mass ratio((d)/(c)) | | 1.11 | 1.00 | 1.00 | 1.11 | 0.83 | 0.50 | 0.71 |
| Evaluation results | Tracking resistance CTI value(V) | 550 | 575 | >600 | >600 | >600 | >600 | 550 |
| | Tensile strength (MPa) | 65.2 | 66.5 | 64.7 | 65.4 | 67.0 | 72.1 | 61.7 |
| | Tensile fracture strain (%) | 2.9 | 2.8 | 2.7 | 2.7 | 3.5 | 3.9 | 3.1 |
| | Flame retardancy (UL94V test) | V-1 | V-1 | V-1 | V-1 | V-1 | V-1 | NG |
| | DTUL(°C) | 106 | 109 | 103 | 103 | 106 | 100 | 154 |

**Table 2-5**

| | Component (code) | Example 29 | Example 30 | Example 31 | Example 32 | Example 33 | Example 34 | Example 35 |
|---|---|---|---|---|---|---|---|---|
| Composition of PPE-based resin composition (parts by mass) | (a-1) | 100.0 | 80.0 | 75.0 | 75.0 | 80.0 | 65.2 | 65.2 |
| | (a-2) | | | | | | | |
| | (b-1) | | 20.0 | 25.0 | 25.0 | 20.0 | 34.8 | 34.8 |
| | (b-2) | | | | | | | |
| | (b-3) | | | | | | | |
| | (c-1) | | | | | | | |
| | (c-2) | 15.7 | 11.1 | 16.7 | 16.7 | 17.7 | 6.5 | 6.5 |
| | (c-3) | | | | | | | |
| | (c-4) | | | | | | | |
| | (c-5) | | | | | | | |
| | (c-6) | | | | | | | |
| | (x-1) | | | | | | | |
| | (x-2) | | | | | | | |
| | (x-3) | | | | | | | |
| | (x-4) | | | | | | | |
| | (x-5) | | | | | | | |
| | (x-6) | | | | | | | |
| | (d-1) | 7.8 | 9.2 | 8.4 | 8.4 | 17.7 | 6.5 | 6.5 |
| | (d-2) | | | | | | | |
| | (d-3) | | | 8.4 | | | | |
| | (d-4) | | | | 8.4 | | | |
| | (e-1) | 30.0 | 24.0 | 23.4 | 23.4 | 17.7 | | |
| | (e-2) | | | | | 3.5 | | |
| | (f-1) | 3.1 | 40.0 | 10.0 | 10.0 | 20.0 | | |
| | (f-2) | | | | | | 2.6 | |
| | (f-3) | | | | | | | 2.6 |
| | (f-4) | | | | | | | |
| | (f-5) | | | | | | | |
| | (f-6) | | | | | | | |
| | (g-1) | | | | | | | |
| | (k-1) | 0.11 | 0.13 | 0.12 | 0.12 | 0.12 | 0.09 | 0.09 |
| | (h-1) | 0.16 | 0.18 | 0.13 | 0.13 | 0.14 | 0.13 | 0.13 |
| | (i-1) | | | | | | | |
| | (i-2) | | | | | | | |
| Mass ratio((d)/(c)) | | 0.50 | 0.83 | 1.00 | 1.00 | 1.00 | 1.00 | 1.00 |
| Evaluation results | Tracking resistance CTI value(V) | >600 | >600 | >600 | >600 | 575 | 575 | 575 |
| | Tensile strength(MPa) | 76.7 | 62.2 | 66.0 | 64.7 | 77.2 | 68.1 | 67.5 |
| | Tensile fracture strain (%) | 4.2 | 3.4 | 2.8 | 2.8 | 2.4 | 3.8 | 3.6 |
| | Flame retardancy (UL94V test) | V-0 | V-0 | V-1 | V-1 | V-1 | V-1 | V-1 |
| | DTUL(°C) | 106 | 106 | 109 | 102 | 114 | 112 | 112 |

**Table 2-6**

| | Component (code) | Example 36 | Example 37 | Example 38 | Example 39 | Example 40 | Example 41 | Example 42 | Example 43 |
|---|---|---|---|---|---|---|---|---|---|
| Composition of PPE-based resin composition (parts by mass) | (a-1) | 65.2 | 65.2 | 65.2 | 80.0 | 80.0 | 90.0 | 95.0 | 66.0 |
| | (a-2) | | | | | | | | |
| | (b-1) | 34.8 | 34.8 | 34.8 | 20.0 | 20.0 | 10.0 | 5.0 | 34.0 |
| | (b-2) | | | | | | | | |
| | (b-3) | | | | | | | | |
| | (c-1) | | | | | | | | |
| | (c-2) | 6.5 | 6.5 | 6.5 | 9.3 | 9.6 | 18.6 | 18.6 | |
| | (c-3) | | | | | | | | |
| | (c-4) | | | | | | | | |
| | (c-5) | | | | | | | | |
| | (c-6) | | | | | | | | 9.6 |
| | (x-1) | | | | | | | | |
| | (x-2) | | | | | | | | |
| | (x-3) | | | | | | | | |
| | (x-4) | | | | | | | | |
| | (x-5) | | | | | | | | |
| | (x-6) | | | | | | | | |
| | (d-1) | 6.5 | 6.5 | 6.5 | 7.8 | 8.0 | 18.6 | 18.6 | 6.9 |
| | (d-2) | | | | | | | | |
| | (d-3) | | | | | | | | |
| | (d-4) | | | | | | | | |
| | (e-1) | | | | 17.8 | 18.3 | 22.3 | 22.3 | 15.1 |
| | (e-2) | | | | | 3.2 | 3.7 | 3.7 | |
| | (f-1) | | | | 20.0 | 20.0 | 20.0 | 20.0 | 2.7 |
| | (f-2) | | | | | | | | |
| | (f-3) | | | | | | | | |
| | (f-4) | 2.6 | | | | | | | |
| | (f-5) | | 2.6 | | | | | | |
| | (f-6) | | | 2.6 | | | | | |
| | (g-1) | | | | | | 2.23 | 2.23 | |
| | (k-1) | 0.09 | 0.09 | 0.09 | 0.11 | 0.11 | 0.13 | 0.13 | 0.10 |
| | (h-1) | 0.13 | 0.13 | 0.13 | 0.12 | 0.13 | 0.15 | 0.15 | 0.14 |
| | (i-1) | | | | | | | | 1.4 |
| | (i-2) | | | | | | | | 1.4 |
| Mass ratio((d)/(c)) | | 1.00 | 1.00 | 1.00 | 0.83 | 0.83 | 1.00 | 1.00 | 0.71 |
| Evaluation results | Tracking resistance CTI value(V) | 575 | 575 | 575 | >600 | >600 | >600 | >600 | 575 |
| | Tensile strength (MPa) | 65.7 | 67.5 | 67.1 | 68.0 | 67.8 | 84.3 | 87.9 | 59.4 |
| | Tensile fracture strain (%) | 3.7 | 3.8 | 4.0 | 5.0 | 3.4 | 2.5 | 2.7 | 3.6 |
| | Flame retardancy (UL94V test) | V-1 | V-1 | V-1 | V-1 | V-0 | V-0 | V-0 | V-1 |
| | DTUL(°C) | 102 | 112 | 112 | 117 | 107 | 110 | 112 | 108 |

**Table 2-7**

| | Component (code) | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| | (a-1) | 65.0 | 66.0 | 66.0 | 66.0 | 66.0 | 66.0 | 66.0 | 70.0 | 70.0 |
| | (a-2) | | | | | | | | | |
| | (b-1) | 35.0 | | 34.0 | 34.0 | 34.0 | 34.0 | 34.0 | 30.0 | 30.0 |
| | (b-2) | | 34.0 | | | | | | | |
| | (b-3) | | | | | | | | | |
| | (c-1) | | | | | | | | | |
| | (c-2) | 9.0 | | | | | | | 25.0 | 20.0 |
| | (c-3) | | | | | | | | | |
| | (c-4) | | | | | | | | | |
| | (c-5) | | | | | | | | | |
| | (c-6) | | | | | | | | | |
| | (x-1) | | 9.6 | | | | | | | |
| | (x-2) | | | 9.6 | | | | | | |
| | (x-3) | | | | 9.6 | | | | | |
| Composition of PPE-based resin composition (parts by mass) | (x-4) | | | | | 9.6 | | | | |
| | (x-5) | | | | | | 9.6 | | | |
| | (x-6) | | | | | | | 9.6 | | |
| | (d-1) | | 6.9 | 6.9 | 6.9 | 6.9 | 6.9 | 6.9 | 6.7 | 35.0 |
| | (d-2) | | | | | | | | | |
| | (d-3) | | | | | | | | | |
| | (d-4) | | | | | | | | | |
| | (e-1) | 14.1 | 15.1 | 15.1 | 15.1 | 15.1 | 15.1 | 15.1 | | |
| | (e-2) | | | | | | | | | |
| | (f-1) | 2.6 | 2.7 | 2.7 | 2.7 | 2.7 | 2.7 | 2.7 | 2.7 | |
| | (f-2) | | | | | | | | | |
| | (f-3) | | | | | | | | | |
| | (f-4) | | | | | | | | | |
| | (f-5) | | | | | | | | | |
| | (f-6) | | | | | | | | | |
| | (g-1) | | | | | | | | | |
| | (k-1) | 0.09 | 0.10 | 0.10 | 0.10 | 0.10 | 0.10 | 0.10 | 0.09 | 0.11 |
| | (h-1) | 0.13 | 0.14 | 0.14 | 0.14 | 0.14 | 0.14 | 0.14 | | |
| | (i-1) | 1.3 | 1.4 | 1.4 | 1.4 | 1.4 | 1.4 | 1.4 | | |
| | (i-2) | 1.3 | 1.4 | 1.4 | 1.4 | 1.4 | 1.4 | 1.4 | | |
| Mass ratio((d)/(c)) | | 0.00 | 0.71 | 0.71 | 0.71 | 0.71 | 0.71 | 0.71 | 0.27 | 1.75 |
| Evaluation results | Tracking resistance CTI value (V) | >600 | 300 | 325 | 300 | 275 | 475 | 475 | 500 | 175 |
| | Tensile strength (MPa) | 57.0 | 58.9 | 59.0 | 58.9 | 58.4 | 54.3 | 55.3 | 50.2 | 71.5 |
| | Tensile fracture strain(%) | 9.2 | 3.8 | 3.7 | 3.8 | 4.3 | 4.3 | 4.7 | 2.4 | 1.3 |
| | Flame retardancy (UL94V test) | V-1 | V-1 | V-1 | V-1 | NG | V-1 | V-1 | NG | NG |
| | DTUL(°C) | 98 | 102 | 104 | 106 | 105 | 104 | 104 | 150 | 163 |

The present invention is not limited by the embodiments or Examples described above, and also configurations in which components described above are combined as appropriate are included in the present invention. Further, all other embodiments, Examples, operation techniques, and the like made by those skilled in the art or the like based on the embodiments described above are included in the scope of the present invention.

### Industrial Applicability

A PPE-based resin composition according to the present invention can achieve both high mechanical strength and high tracking resistance, and therefore can be very suitably used for various molded articles such as battery unit housings.

## Claims

1. A polyphenylene ether-based resin composition comprising
2 to 20 parts by mass of a polypropylene homopolymer (c) and 1 to 25 parts by mass of an inorganic filler (d) with respect to 100 parts by mass of a polyphenylene ether-containing resin (A) containing a polyphenylene ether-based resin (a) or containing the polyphenylene ether-based resin (a) and a styrene-based resin (b).

2. The polyphenylene ether-based resin composition according to claim 1, wherein
a mass ratio of the inorganic filler (d) to the polypropylene homopolymer (c) is 0.5 to 3.0.

3. The polyphenylene ether-based resin composition according to claim 1 or 2, wherein
a melt flow rate of the polypropylene homopolymer (c) measured according to JIS K 7210 is 3 to 40 g/10 min under measurement conditions of a temperature of 230°C and a load of 2.16 kg.

4. The polyphenylene ether-based resin composition according to any one of claims 1 to 3, further comprising
5 to 35 parts by mass of a flame retardant (e) with respect to 100 parts by mass of the polyphenylene ether-containing resin (A).

5. The polyphenylene ether-based resin composition according to claim 4, wherein
the flame retardant (e) is a phosphoric acid ester-based flame retardant.

6. The polyphenylene ether-based resin composition according to any one of claims 1 to 5, further comprising
0.5 to 50 parts by mass of a flame retardant aid (f) with respect to 100 parts by mass of the polyphenylene ether-containing resin (A).

7. The polyphenylene ether-based resin composition according to claim 6, wherein
the flame retardant aid (f) contains at least one selected from an alkaline earth metal salt, a metal hydroxide, a nitrogen-containing compound, an inorganic acid metal compound, and a layered double hydroxide.

8. The polyphenylene ether-based resin composition according to claim 6, wherein
the flame retardant aid (f) is calcium carbonate.

9. The polyphenylene ether-based resin composition according to any one of claims 1 to 8, wherein
the inorganic filler (d) is at least one selected from glass fiber, mica, and talc.

10. The polyphenylene ether-based resin composition according to any one of claims 1 to 9, wherein
a content ratio of the polyphenylene ether-based resin (a) is 55 to 100 mass% and a content ratio of the styrene-based resin (b) is 0 to 45 mass% in 100 mass% of the polyphenylene ether-containing resin (A).

11. The polyphenylene ether-based resin composition according to any one of claims 1 to 10, wherein
a content ratio of the polyphenylene ether-based resin (a) is 90 to 100 mass% and a content ratio of the styrene-based resin (b) is 0 to 10 mass% in 100 mass% of the polyphenylene ether-containing resin (A).

12. The polyphenylene ether-based resin composition according to claim 11, further comprising
0.1 to 20 parts by mass of a phosphorus-based stabilizer (g) with respect to 100 parts by mass of the polyphenylene ether-containing resin (A).

13. The polyphenylene ether-based resin composition according to claim 12, wherein
the phosphorus-based stabilizer (g) contains at least one of a phosphite-based compound and a phosphonite-based compound.

14. The polyphenylene ether-based resin composition according to any one of claims 1 to 13, further comprising
0.01 to 2.0 parts by mass of a black pigment (h) with respect to 100 parts by mass of the polyphenylene ether-containing resin (A).

15. The polyphenylene ether-based resin composition according to any one of claims 1 to 14, wherein
a CTI value measured according to IEC 60112 is 400 V or more, and
a tensile strength measured according to ISO 527 is 60 MPa or more.

16. A molded article
made of the polyphenylene ether-based resin composition according to any one of claims 1 to 15.

17. The molded article according to claim 16, wherein
the molded article is a battery unit housing.
